# FASCICULE DE BREVET EUROPEEN

(11) **EP 0 983 185 B1**
(45) Date de publication et mention de la délivrance du brevet: **02.01.2004**
(21) Numéro de dépôt: 98928386.6
(22) Date de dépôt: 29.05.1998
(51) Int. Cl.: B62M 3/08

(54) **PEDALE DE VELO, NOTAMMENT DE COMPETITION**
RENNRADPEDAL
BICYCLE PEDAL, IN PARTICULAR FOR DERAILLEUR BIKE

(30) Priorité: 30.05.1997 FR 9706694
(43) Date de publication de la demande: 08.03.2000
(73) Titulaire: Alvarez Ordas, Salustiano, 36600 Villentrois (FR)
(72) Inventeur: DE SOUZA, Jean, décédé (FR)
(74) Mandataire: Laget, Jean-Loup
(86) Numéro de dépôt international: PCT/FR1998/001079
(87) Numéro de publication internationale: WO 1998/054047

(56) Documents cités:
- CH-A- 235 694
- FR-A- 2 729 633

## Description

L'invention concerne une pédale de vélo destinée notamment à des vélos de compétition.

On connaît des compétitions à plusieurs disciplines, consistant à enchaîner, notamment des courses à pied et à vélo.

Afin de courir aussi bien à pied qu'à vélo dans les meilleures conditions, les sportifs disposent d'une paire de chaussures spéciales pour chaque discipline à savoir des chaussures pour la course à pied et des chaussures spéciales de cyclisme dont la semelle est équipée d'une plaque destinée à être encliquetée sur un support adapté de la pédale de vélo.

Bien que les chaussures adaptées à chaque discipline permettent au sportif de pratiquer celle-ci de façon optimale, les changements de chaussures nécessitent un temps qui est précieux et parfois déterminant pour gagner ou non une compétition.

De plus, comme les chaussures spéciales de cyclisme sont très étroites, beaucoup de sportifs ont du mal à enfiler ces chaussures spéciales ce qui les désavantage encore plus au cours de la compétition.

Pour remédier à cet inconvénient, on connaît dans la demande de brevet français FR-2 729 633 au nom de M. DE SOUZA, une pédale de vélo destinée à être utilisée avec des chaussures normales, notamment des chaussures prévues pour la course à pied, dont la semelle n'est pas équipée d'une plaque spéciale et qui permet d'obtenir les mêmes performances que les équipements spéciaux précités. Cette pédale connue comprend une palette avant portant un cale-pied avant et une palette arrière portant un cale-pied arrière. La palette avant est reliée à la palette arrière par des moyens d'accouplement élastiques débrayables par un pivotement de la palette arrière provoqué par le pied du cycliste. Lors du pivotement, les moyens d'accouplement se débrayent et la palette arrière tombe vers le bas de sorte que le cycliste peut libérer son pied des cale-pieds avant et arrière. En utilisant cette pédale adaptée à toutes sortes de chaussures, notamment des chaussures pour la course à pied, le sportif n'a plus besoin de changer ses chaussures entre les différentes disciplines ce qui lui permet de gagner des secondes voire des minutes précieuses.

Toutefois, cette pédale connue présente l'inconvénient qu'en position débrayée, c'est-à-dire quand la palette arrière est en position abaissée, on ne peut enclencher la palette arrière que manuellement, ce qui peut poser des problèmes d'équilibre notamment lors de l'enclenchement de la palette arrière de la seconde pédale.

L'invention vise à pallier cet inconvénient en proposant un développement de la pédale de vélo décrite ci-dessus qui ne nécessite plus une intervention manuelle du sportif pour l'enclenchement de la palette arrière de la pédale.

A cet effet, l'invention a pour objet une pédale de vélo destinée à être reliée à une manivelle d'un pédalier et comprenant une palette avant portant un cale-pied avant et une palette arrière portant un cale-pied arrière, des moyens d'accouplement de la palette arrière à la palette avant dans une position active de serrage d'une chaussure par les cale-pieds avant et arrière et des moyens de débrayage desdits moyens d'accouplement de la position active vers une position inactive de la palette arrière caractérisée en ce qu'elle comporte en outre des moyens pour ramener la palette arrière en position active par action sur la palette avant.

La pédale de vélo selon l'invention peut de plus comporter une ou plusieurs des caractéristiques suivantes :
- les moyens pour ramener la palette arrière en position active comprennent des moyens d'embrayage des moyens d'accouplement assurant un positionnement relatif des palettes avant et arrière dans une position intermédiaire de serrage de la chaussure par les cale-pieds avant et arrière ;
- les moyens pour ramener la palette arrière en position active par action sur la palette avant comprennent en outre des moyens d'entraînement angulaire de l'ensemble palette avant/palette arrière solidarisés par les moyens d'embrayage, par action sur la palette avant, de la position intermédiaire vers ladite position active et des moyens de maintien dudit ensemble dans ladite position active ;
- lesdits moyens d'accouplement comprennent une embase comportant un arbre de roulement destiné à être fixé à la manivelle du pédalier, des moyens d'articulation de la palette avant sur l'embase suivant un axe d' articulation sensiblement parallèle à l'arbre de roulement et distant de celui-ci, la palette avant étant déplaçable autour de son axe d' articulation entre une première position dans laquelle la palette avant est en appui sur l'embase et une seconde position dans laquelle la palette avant active lesdits moyens d'embrayage et des moyens de liaison entre la palette arrière et l'embase ;
- les moyens de maintien comprennent des moyens élastiques de retenue de la palette avant sur l'embase pour maintenir celle-ci dans ladite première position d'appui sur l'embase ;
- les moyens de liaison entre la palette arrière et l'embase comportent des moyens de pivotement de la palette arrière autour d'un axe de pivotement sensiblement perpendiculaire à un plan contenant l'arbre de roulement et l'axe d' articulation, et des moyens de basculement de la palette arrière autour d'un axe de basculement sensiblement orthogonal à l'axe de pivotement pour permettre un mouvement basculant de la palette arrière entre une position relevée dans laquelle la palette arrière est dans sa position active et une position abaissée dans laquelle la palette arrière est dans sa position inactive ou dans sa position intermédiaire ;
- les moyens d'entraînement angulaire de l'ensemble palette avant/palette arrière comprennent les moyens d'articulation de la palette avant sur l'embase et les moyens de basculement de la palette arrière autour de l'axe de basculement, l'axe d'articulation de la palette avant sur l'embase et l'axe de basculement de la palette arrière étant sensiblement alignés lorsque les palettes avant et arrière sont solidarisées par les moyens d'embrayage pour permettre un déplacement angulaire de l'ensemble palette avant/palette arrière de la position intermédiaire vers ladite position active ;
- lesdits moyens d'embrayage desdits moyens d'accouplement comprennent un levier de basculement solidaire de la palette arrière, et, portés par la palette avant, des moyens d'appui sur le levier de basculement pour solidariser la palette avant par rapport à la palette arrière ;
- les moyens élastiques d'appui et les moyens élastiques de retenue sont formés par un ressort, de préférence un élément unique réalisé sensiblement en forme de U, dont la partie centrale est fixée contre la face de la palette avant en regard de l'embase, ce ressort comprenant une branche de retenue dont l'extrémité libre coopère, dans la position active d'une chaussure, avec un taquet de retenue porté par l'embase, et une branche d'appui dont l'extrémité appuie, dans la position active ou intermédiaire de serrage d'une chaussure, sur le levier de basculement ;
- le taquet de retenue est formé sur un coulisseau déplaçable dans la direction longitudinale sur l'embase, ledit coulisseau, dans la position active de serrage, coopérant par son taquet avec la branche de retenue du ressort et étant bloqué en translation par le levier de basculement de la palette arrière, alors que dans la position intermédiaire de serrage, le taquet du coulisseau est libéré de la branche de retenue du ressort qui se trouve dans la seconde position de la palette avant, et le coulisseau est en position reculée dégagée du blocage du levier de basculement qui se trouve dans la position abaissée de la palette arrière ;
- le coulisseau est muni d'un moyen élastique de recul pour provoquer le recul du coulisseau, lorsque la pédale est en position inactive, le coulisseau étant alors dégagé du blocage du levier de basculement qui se trouve dans la position abaissée de la palette arrière, le recul du coulisseau provoquant simultanément la libération de l'emprise du taquet par rapport à la branche de retenue du ressort qui se trouve dans la première position de la palette avant ;
- le levier de basculement comprend une extrémité libre arrondie pour permettre à la branche d'appui du ressort de glisser sur cette extrémité arrondie lors de l'embrayage desdits moyens d'accouplement, et une encoche proche de cette extrémité libre et destinée à coopérer avec ladite extrémité de ladite branche d'appui dans la position active ou intermédiaire de serrage d'une chaussure ;
- l'extrémité libre du levier de basculement est apte à provoquer l'embrayage automatique de la branche d'appui du ressort dans l'encoche sensiblement en fin de course angulaire de la palette avant entre ses première et seconde position ;
- l'embase comporte une butée basse coopérant avec la palette arrière lorsqu'elle est en position abaissée, pour assurer un alignement correct de la palette arrière par rapport à la palette avant, en position inactive ou intermédiaire de serrage de la chaussure ;
- l'embase comporte une rampe de guidage pour guider la palette arrière vers la butée basse lorsqu'elle est déplacée de sa position angulairement décalée par rapport à la palette avant vers sa position abaissée où elle est alignée avec la palette avant ;
- lesdits moyens d'accouplement comprennent en outre des moyens élastiques de rappel angulaire de la palette arrière par rapport à la palette avant ;
- les moyens de débrayage des moyens d'accouplement comprennent lesdits moyens de liaison entre la palette arrière et l'embase ;
- les moyens de débrayage comprennent en outre des moyens élastiques d'amorçage du mouvement basculant de la palette arrière vers la position abaissée ;
- les moyens élastiques de rappel angulaire de la palette arrière par rapport à la palette avant et les moyens élastiques d'amorçage du mouvement basculant de la palette arrière comprennent un ressort hélicoïdal disposé autour de l'axe de basculement et dont une spire d'extrémité est en appui sur la palette arrière et dont l'autre spire d'extrémité est en appui sur l'embase pour rappeler angulairement la palette arrière par rapport à la palette avant ;
- le moyen élastique de rappel angulaire comprend un ressort en épingle disposé autour de l'axe de pivotement et dont un brin d'extrémité est en appui sur l'embase et le moyen élastique d'amorçage comprend un ressort hélicoïdal disposé autour de l'axe de basculement et dont une spire d'extrémité est en appui sur la palette arrière ;
- l'autre extrémité du ressort de rappel angulaire en appui sur l'embase coopère avec un excentrique porté par l'embase et réglable en rotation pour régler la force élastique exercée par ladite extrémité en appui sur l'embase ;
- en position active de serrage d'une chaussure, la palette avant et la palette arrière font un angle compris entre 10 et 20°, et notamment de 15° ;
- la palette avant comprend dans sa face destinée à être en contact avec la chaussure des rainures pour renforcer la transmission de force entre la chaussure et la palette avant ;
- elle comprend des moyens de blocage de l'arbre de roulement pour maintenir la pédale en absence d'une chaussure enfilée dans le cale-pied avant, dans une position angulaire fixe par rapport à la manivelle, et des moyens de désactivation des moyens de blocage ;
- les moyens de blocage comprennent un ressort de blocage hélicoïdal serré autour de l'arbre de roulement et fixé en rotation pour bloquer l'arbre de roulement par le frottement des spires du ressort contre l'arbre de roulement ;
- lesdits moyens de désactivation comprennent un levier de commande articulé sur l'embase et coopérant avec une spire terminale du ressort de blocage, le levier de commande étant déplaçable entre une position de repos dans laquelle il dépasse, maintenu par la force élastique du ressort de blocage, de la palette avant à travers une ouverture ménagée dans celle-ci et une position de désactivation dans laquelle il agrandit par appui sur ladite spire terminale le diamètre de toutes les spires du ressort de blocage pour rendre l'arbre de roulement libre en rotation ;
- les moyens de blocage comprennent une noix d'articulation ayant une ouverture oblongue débouchant transversalement, de façon à être traversée par l'arbre de roulement et un ressort de blocage sollicitant la noix d'articulation de façon que l'arbre de roulement soit bloqué par frottement contre la surface interne de l'ouverture oblongue ;
- lesdits moyens de désactivation comprennent un levier de commande articulé sur l'embase et coopérant avec la noix d'articulation ; le levier de commande étant déplaçable entre une position de repos dans laquelle il dépasse, sous l'action de la force élastique du ressort de blocage, de la palette avant à travers une ouverture ménagée dans celle-ci, et une position de désactivation dans laquelle le levier de commande est escamoté dans la palette avant et déplace la noix d'articulation dans une position où l'arbre de roulement n'est plus en contact frottant avec l'ouverture oblongue ;
- elle comprend un premier catadioptre porté par la palette avant ou l'embase et un second catadioptre porté par la palette arrière ;
- le cale-pied avant présente une forme en pieuvre comportant un corps central muni d'une pluralité de lanières qui viennent se fixer sur le dessous de la palette avant ;
- la palette avant comporte sur sa paroi latérale périphérique des ouvertures pour y insérer les extrémités libres des lanières qui sont bloquées par des pinces de fixation articulées à l'intérieur de la palette avant.

D'autres caractéristiques et avantages de l' invention ressortiront de la description suivante, donnée à titre d'exemple, sans caractère limitatif, en regard des dessins annexés sur lesquels :
La figure 1 est une vue de côté d'une pédale selon l'invention dans une position active de serrage d'une chaussure,
La figure 2 est une vue de dessus de la pédale de la figure 1,
La figure 3 est une vue agrandie en coupe longitudinale, suivant la ligne III-III de la figure 2,
La figure 4 est une vue agrandie en coupe de dessus, suivant la ligne IV-IV de la figure 1,
La figure 5A est une vue en coupe, suivant la ligne III-III de la figure 2, de la palette arrière et de l'embase de la pédale selon l'invention,
La figure 5B est une vue en coupe, suivant la ligne VB-VB de la figure 5A, d'une pièce de la pédale selon l'invention,
La figure 6 est une vue en coupe suivant la ligne VI-VI de la figure 2, d'un détail de la pédale selon l'invention ;
La figure 7 est une vue schématique de dessus, partiellement en coupe, suivant la ligne VII-VII de la figure 3, dans laquelle la palette arrière est abaissée et décalée angulairement par rapport à la palette avant,
La figure 8 est une vue analogue à celle de la figure 3 dans laquelle la palette arrière est en position abaissée,
La figure 9 est une vue schématique analogue à celle de la figure 1 montrant la pédale selon l'invention dans une position intermédiaire de serrage d'une chaussure,
Les figures 10A à 10E sont des schémas simplifiés illustrant les différentes positions des éléments constitutifs de la pédale selon l' invention,
La figure 11 est une vue de dessus partiellement arrachée d'un autre mode de réalisation de la pédale de l' invention, dans sa position active de serrage d'une chaussure,
La figure 11A est une vue partielle et en coupe suivant la ligne XI A de la figure 11, illustrant un détail de réalisation à plus grande échelle;
Les figures 12 et 13 sont des vues en coupe de la figure 11, respectivement suivant les lignes XII et XIII,
Les figures 14A et 14B sont des vues partielles et en coupe suivant la ligne XIV de la figure 11, respectivement dans une position de blocage et dans une position de libération du levier de blocage par rapport à l'arbre de rotation de la pédale,
La figure 15 est une vue en plan et de dessus d'un cale-pied avant pour la pédale de la figure 11,
La figure 16 est une vue en coupe longitudinale, passant par un plan vertical de la pédale de la figure 11, dans une position active de serrage d'une chaussure,
La figure 17 est une vue analogue à la figure 16, mais représentant la pédale avec sa palette arrière en position abaissée, dans une position inactive de la pédale,
Les figures 18 et 19 sont des vues partielles de la figure 17 dans deux positions successives de la palette avant, lors de sa course ascendante vers la position intermédiaire de serrage de la chaussure pour rechausser la pédale,
La figure 20 est une vue analogue à la figure 17, mais représentant la palette avant en fin de course ascendante, dans la position intermédiaire de serrage,
La figure 21 est une vue partielle de la figure 20, lors de la course descendante de la palette avant entre la position intermédiaire et la position active de serrage.

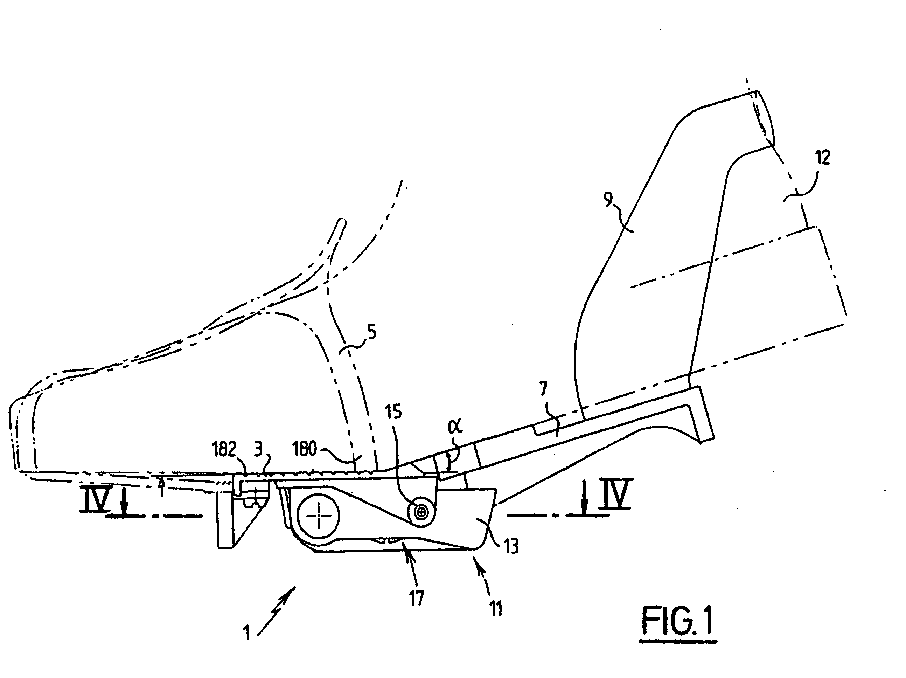

Sur les figures 1 à 9, est représenté un premier mode de réalisation d'une pédale de vélo 1 selon l'invention destinée à être reliée à une manivelle non représentée d'un pédalier.

Cette pédale 1 comprend une palette avant 3 portant un cale-pied avant 5, et une palette arrière 7 portant un cale-pied 9. Les palettes avant 3 et arrière 7 sont reliées l'une à l'autre par des moyens 11 d'accouplement.

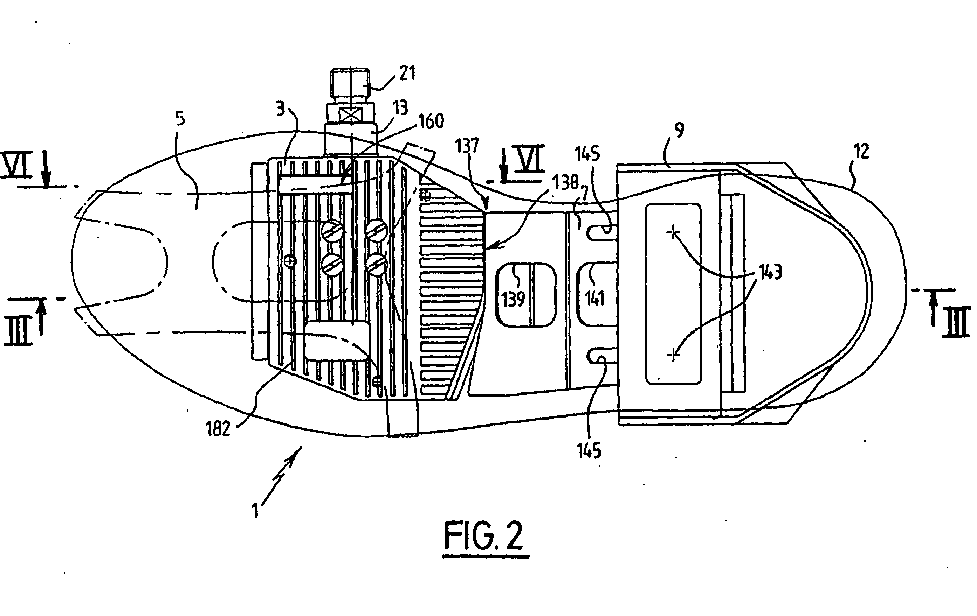

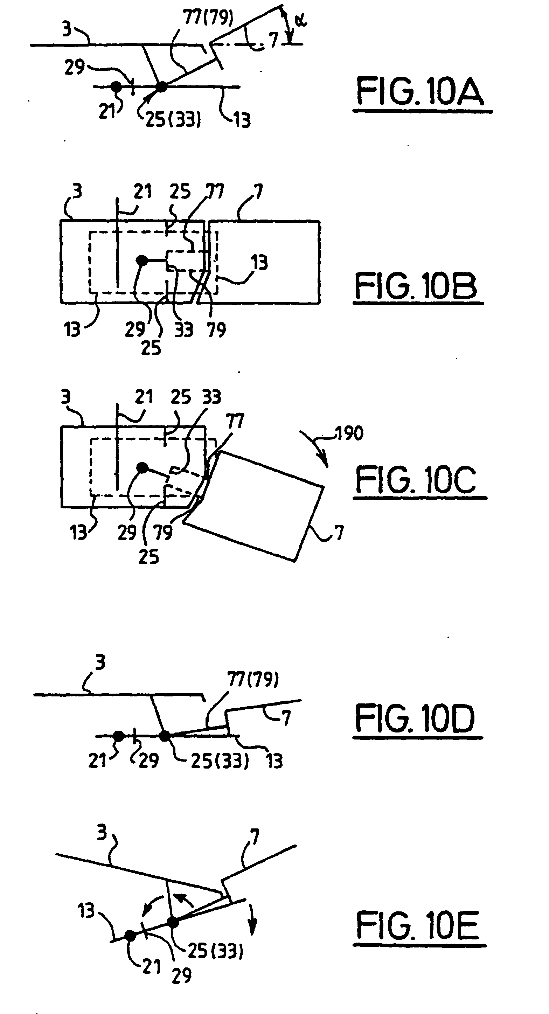

Les moyens 11 d'accouplement ainsi que les palettes avant 3 et arrière 7 sont montrés sur ces figures dans une position active de serrage d'une chaussure 12 par les cale-pieds avant 5 et arrière 9. Cette position est dite "active" car elle correspond à la position de pédalage ou d'utilisation. Cette position active de la pédale est également montrée à l'aide de schémas simplifiés sur les figures 10A et 10B, le schéma de la figure 10A correspondant à la vue de la figure 1 et le schéma se la figure 10B correspondant à la vue de la figure 2.

Avantageusement, les palettes avant 3 et arrière 7 qui supportent la semelle de la chaussure 12, font dans cette position active de serrage un angle □compris entre 10 et 20°, et notamment égal à 15°. Cet angle □correspond sensiblement à la cambrure d'un pied et permet une transmission plus efficace de la force exercée par un cycliste à la pédale de vélo 1.

Comme on le voit sur la figure 1, les moyens 11 d'accouplement comprennent une embrase 13, des moyens 15 d'articulation de la palette avant 3 sur l'embase 13 et des moyens 17 de liaison entre la palette arrière 7 et l'embase 13.

En référence à la figure 5A, l'embase 13 comporte à son extrémité avant 18 un roulement spécial 19, c'est-à-dire un roulement radial et axial, avec une bague autolubrifiante 20 et un arbre 21 de roulement monté à rotation dans ce roulement 19. L'arbre 21 de roulement est destiné à être relié de façon fixe à une manivelle non représentée d'un pédalier.

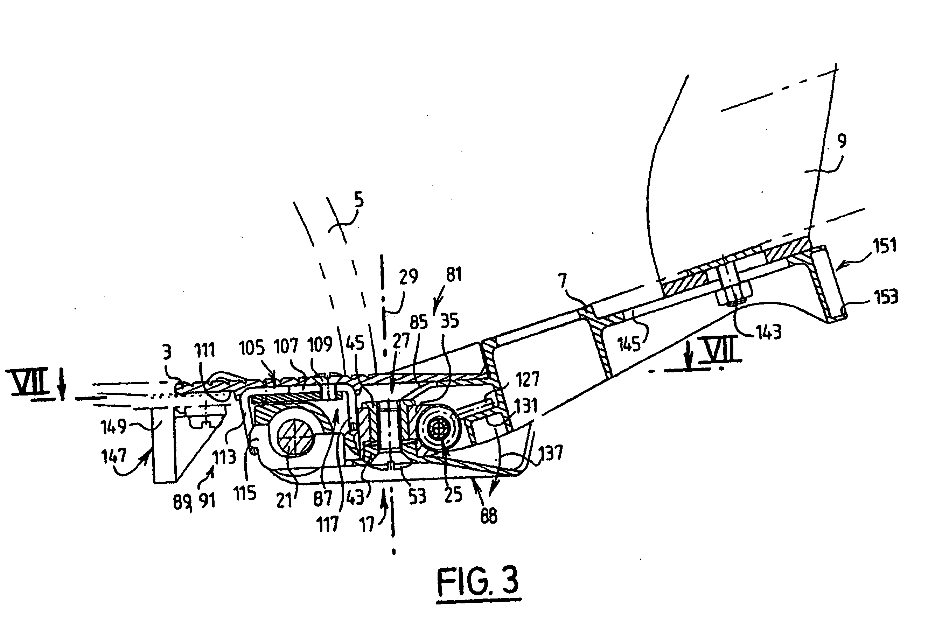

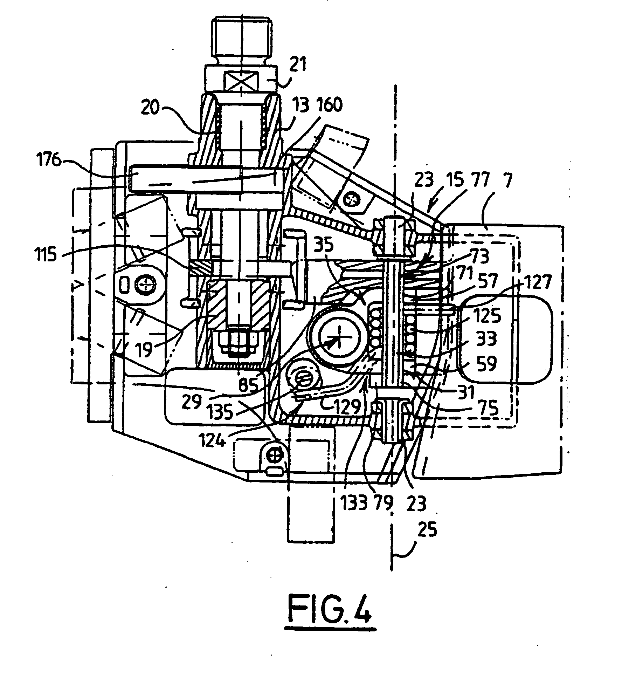

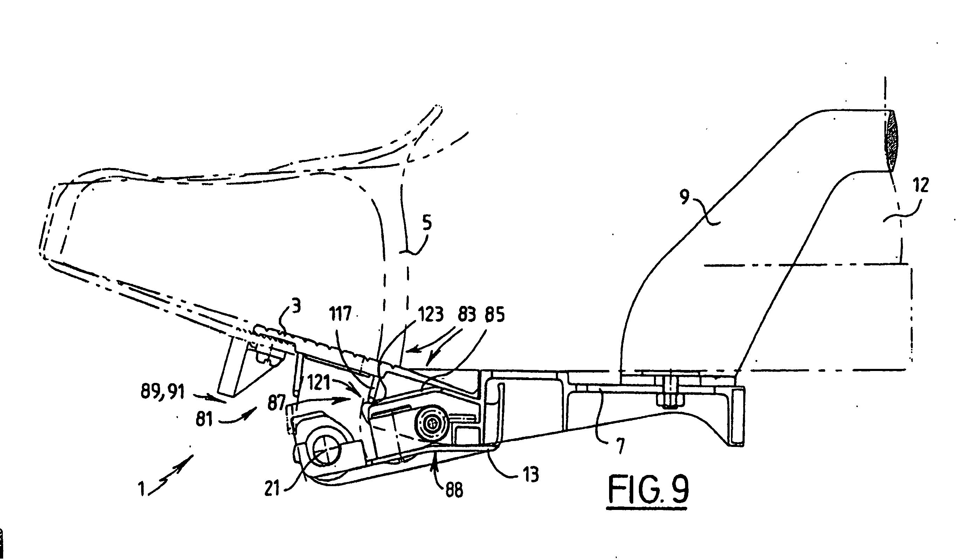

Comme on le voit sur la figure 4, les moyens 15 d'articulation de la palette avant 3 sur l'embase 13 sont formés par des liaisons 23 formant chacune une chape. Ces liaisons 23 définissent un axe 25 d'articulation de la palette avant 3 sur l'embase 13 qui est parallèle à l'arbre 21 de roulement et disposé à distance derrière celui-ci. Ainsi, la palette avant 3 est déplaçable autour de son axe d' articulation 25 entre une première position (voir figures 1 et 3) dans laquelle elle est en appui sur l'embase 13 et une seconde position (voir figure 9) dans laquelle elle est dégagée de l'embase 13. La fonction de cette seconde position sera décrite plus loin.

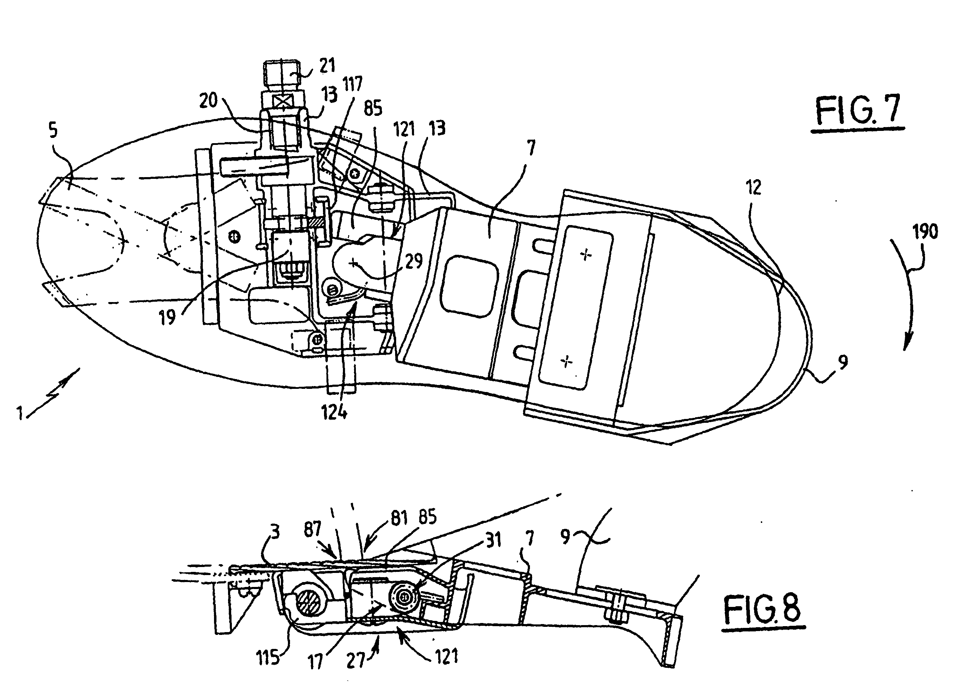

En référence à la figure 3, les moyens 17 de liaison de la palette arrière 7 à l'embase 13 comportent des moyens 27 de pivotement de la palette arrière 7 autour d'un axe 29 de pivotement qui est sensiblement perpendiculaire à un plan contenant l'arbre 21 de roulement et l'axe 25 d'articulation. Grâce à ces moyens 27 de pivotement, la palette arrière 7 peut pivoter autour de son axe 29 de pivotement entre une position dans laquelle elle est alignée angulairement avec la palette avant 3 (voir figures 2, 4 et 10B) et une position dans laquelle elle est déplacée angulairement par rapport à la palette avant 3 (voir figures 7 et 10C).

Ainsi que cela est représenté sur la figure 4, les moyens 17 de liaison comprennent en outre des moyens 31 de basculement de la palette arrière 7 autour d'un axe 33 de basculement sensiblement orthogonal à l'axe 29 de pivotement pour permettre un mouvement basculant de la palette arrière 7 entre une position relevée (voir figures 1, 3 et 10A) dans laquelle la palette arrière 7 est dans sa position active et une position abaissée dans laquelle la palette arrière 7 est dans sa position inactive (voir figures 8 et 10D) ou une position intermédiaire de serrage de la chaussure 12 (voir figures 9 et 10E).

Par position intermédiaire de serrage de la chaussure 12, on entend la position représentée sur les figures 9 et 10E dans laquelle la palette avant 3 est dans sa seconde position, dégagée de l'embase 13 et la palette arrière 7 dans sa position abaissée et alignée angulairement par rapport à la palette avant 3. Dans cette position intermédiaire, les palettes avant 3 et arrière 7 sont positionnées l'une par rapport à l'autre et solidarisées entre elles de sorte que la chaussure 12 est maintenue par les cale-pieds avant 5 et arrière 9. Mais dans cette position intermédiaire, l'ensemble palette avant 3/palette arrière 7 doit encore effectuer un déplacement angulaire commun pour revenir dans la position active.

Lorsque la palette arrière 7 est alignée angulairement par rapport à la palette avant 3, l'axe 25 d'articulation et l'axe 33 de basculement sont alignés l'un par rapport à l'autre (voir figures 4 et 10B) de sorte que les palettes 3 et 7 peuvent osciller comme un ensemble autour d'un axe géométrique commun.

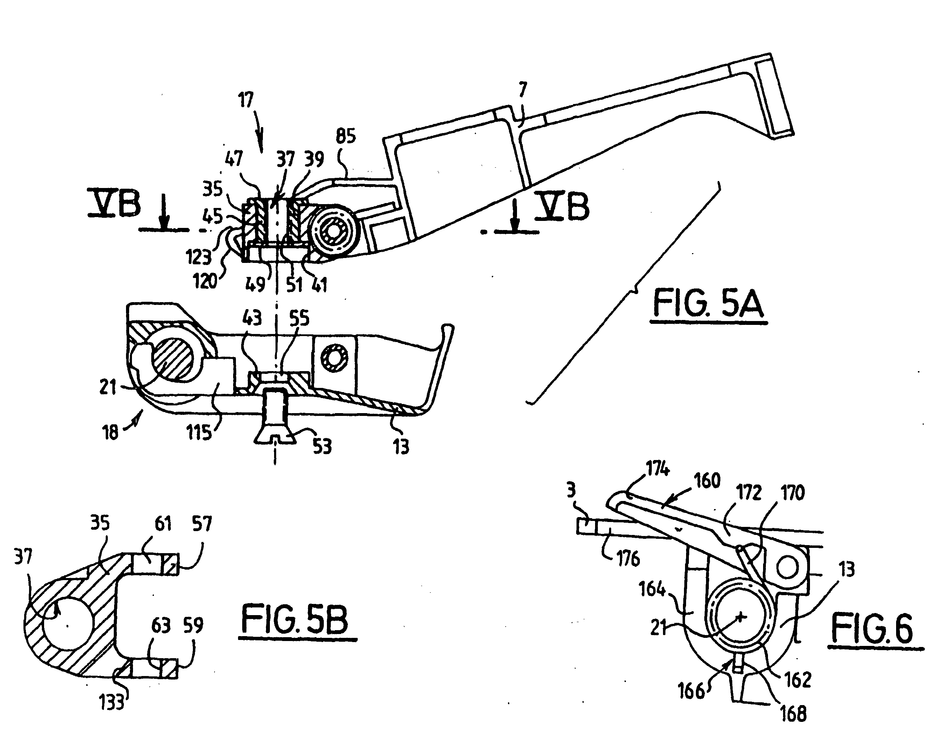

Ainsi que cela est représenté plus en détail sur la figure 5A, les moyens 17 de liaison comprennent une noix d'articulation 35 représentées seule en coupe sur la figure 5B. Cette noix 35 comporte un passage cylindrique 37 présentant un premier alésage 39, et, à son extrémité inférieure, un second alésage 41 de plus grand diamètre que le premier alésage 39. Ce second alésage 41 est destiné à recevoir un socle central cylindrique 43 de l'embase 13, venu de matière de l'embase 13. Dans l'alésage 39 de plus faible diamètre est monté rotatif un manchon cylindrique 45. Ce manchon 45 comporte à une extrémité un épaulement de retenue 47 en appui sur le dessus de la noix 35 et à son autre extrémité une rondelle 49 anti-usure de la noix d'articulation 35 pour retenir le manchon 45 dans le premier alésage 39 du passage 37 de la noix 35. Le diamètre intérieur de la rondelle 49 est égal au diamètre intérieur du manchon 45 et les diamètres périphériques de l'épaulement 47 ainsi que de la rondelle 49 sont égaux et seulement légèrement inférieurs au diamètre de l'alésage 41 du passage 37. Le manchon 45 comporte de plus un filetage inférieur 51 qui coopère avec une vis 53 introduite à travers un trou 55 ménagé dans le socle 43 de l'embase 13. La figure 3 montre la noix 35 et le manchon 45 assemblés sur le socle 43 de l'embase 13 par la vis 53. Le manchon 45 est fixé contre le socle 43 par la vis 53, mais la noix 35 peut pivoter autour du manchon 45.

Comme cela est représenté sur la figure 5B, la noix 35 comporte deux bras 57 et 59 parallèles l'un par rapport à l'autre. Les bras 57 et 59 comportent respectivement des passages cylindriques 61 et 63. Comme on le voit sur la figure 4, un tube 71 est monté rotatif dans ces passages 61 et 63 . Aux extrémités 73 et 75 du tube 71 sont fixés des prolongements 77 et 79 solidaires de la palette arrière 7. Ainsi, la palette arrière 7 peut basculer autour de son axe 33 de basculement défini ci-dessus, l'axe 25 d'articulation de la palette avant 3 sur l'embase 13 et l'axe 33 de basculement de la palette arrière 7 étant sensiblement alignés lorsque les palettes avant 3 et arrière 7 sont solidarisées par les moyens 83 d'embrayage pour permettre un déplacement angulaire de l'ensemble palette avant 3/palette arrière 7 de la position intermédiaire vers ladite position active.

On comprend que les moyens 27 de pivotement de la palette arrière 7 autour de l'axe 29 de pivotement et les moyens 31 de basculement autour de l'axe 33 de basculement comprennent la noix 35 d'articulation comme élément commun ce qui permet une construction très compacte et légère des moyens 17 de liaison.

La pédale de vélo 1 comprend en outre des moyens 81 pour ramener la palette arrière 7 de la position abaissée représentée sur les figures 8 et 10D vers la position active représentée sur les figures 1, 3 et 10A.

Ces moyens 81 comprennent d'une part des moyens 83 d'embrayage des moyens 11 d'accouplement pour solidariser la palette avant 3 et la palette arrière 7 et pour assurer un positionnement relatif des palettes avant 3 et arrière 7 dans la position intermédiaire de serrage montrée sur les figures 9 et 10E, la palette avant 3 étant alors dégagée de l'embase 13 dans sa seconde position. Cette seconde position est donc une position d'activation des moyens 83 d'embrayage.

Comme on le voit sur les figures 3 et 9, les moyens 83 d'embrayage comprennent un levier 85 de basculement solidaire de la palette arrière 7 et des moyens 87 d'appui sur ce levier 85 solidaires de la palette avant 3.

D'autre part, les moyens 81 comprennent des moyens 88 d'entraînement angulaire de l'ensemble palette avant 3/palette arrière 7 (voir figures 9 et 10E) solidarisés par les moyens 83 d'embrayage par action sur la palette avant 3 de la position intermédiaire vers ladite position active et des moyens 89 de maintien dudit ensemble dans cette position active. Ces moyens 88 d'entraînement comprennent les moyens 15 d' articulation de la palette avant 3 sur l'embase 13 et les moyens de basculement 31 de la palette arrière 7.

Les moyens 89 de maintien comprennent des moyens 91 élastiques de retenue de la palette avant 3 sur l'embase 13 dans ladite première position, dans laquelle elle est en appui sur l'embase 13.

Les moyens d'appui 87 et de retenue 91 sont formés par un élément unique réalisé par un ressort 105 en forme de U. Comme on le voit sur la figure 3, ce ressort 105 présente une partie centrale 107 fixée par quatre vis 109 ou par soudage par ultrasons contre la face inférieure 111 de la palette avant 3, en regard de l'embase 13, une branche 113 de retenue coopérant avec un taquet 115 de retenue solidaire de l'embase 13 et une branche 117 d'appui sur le levier 85 de basculement solidaire de la palette arrière 7.

La longueur du levier de basculement 85 est choisie de telle sorte que la force exercée par la branche 117 d'appui sur l'extrémité libre 120 du levier 85 génère un couple suffisant pour maintenir la palette arrière 7 en position relevée.

Comme on le voit sur la figure 9, l'extrémité libre 120 du levier de basculement 85 est repliée et arrondie. De plus, une encoche 123 qui coopère avec l'extrémité de la branche d'appui 117, est ménagée dans le levier 85 proche de cette extrémité libre 120.

En référence aux figures 7 et 8, la pédale de vélo 1 comprend en outre des moyens 121 de débrayage des moyens 11 d'accouplement afin qu'un utilisateur puisse facilement libérer son pied, dès qu'il le souhaite, pour descendre du vélo. Ces moyens 121 de débrayage comprennent les moyens 17 de liaison, c'est-à-dire les moyens 27 de pivotement pour déplacer angulairement la palette arrière 7 par rapport à la palette avant 3, par action sur la palette arrière 7, de la position active de serrage montrée sur les figures 2 et 10B vers la position décalée montrée sur les figures 7 et 10C de telle sorte que le levier de basculement 85 se dégage de la branche d'appui 117, et des moyens 31 de basculement pour amener la palette arrière 7 de la position relevée (voir figures 1 et 10A) vers la position abaissée (voir figures 8 et 10D). De plus, les moyens 121 de débrayage comprennent des moyens 122 élastiques d'amorçage du mouvement basculant de la palette arrière 7 vers la position abaissée.

Par ailleurs, les moyens 11 d'accouplement comprennent de plus des moyens 124 élastiques de rappel angulaire de la palette arrière 7 par rapport à la palette avant 3 afin d' aligner angulairement la palette arrière 7 par rapport à la palette avant 3.

Avantageusement, lesdits moyens 122 élastiques d'amorçage et lesdits moyens 124 élastiques de rappel angulaire sont formés par un élément unique réalisé par un ressort 125 hélicoïdal représenté sur la figure 4.

Le ressort 125 hélicoïdal est disposé entre les deux bras 57 et 59 de la noix d'articulation 35 et enroulé autour du tube 71. Ce ressort hélicoïdal 125 comprend deux spires terminales 127 et 129 dont une 127 réglable manuellement en rotation et en appui sur une surface d'appui 131 de la palette arrière 7 (voir figure 3) et dont l'autre 129 s'étend à travers un passage 133 (voir figures 4 et 5B) ménagé dans le bras 59 de la noix 35 (voir figure 5B) vers un excentrique 135 placé au voisinage de l'extrémité de cette spire terminale 129, et porté par l'embase 13. Le ressort 125 est précontraint de telle sorte que, d'une part, une force soit exercée sur la surface d'appui 131 par la spire terminale 127 en direction de la flèche 137 (voir figure 3) vers le bas afin d'amorcer un basculement de la palette arrière 7 vers la position abaissée lorsque la branche d'appui 117 du ressort 105 n'appuie plus sur le levier 85 de basculement et, que d'autre part, la palette arrière 7 soit rappelée angulairement par la spire terminale 129 qui est en appui sur l'embase et coopère avec l'excentrique 135 en s'engageant dans une gorge périphérique de celui-ci. L'excentrique 135 est agencé de façon réglable en rotation pour régler la force de rappel exercée par ladite spire terminale 129 en appui sur l'embase 13. Comme on le voit sur la figure 2, une partie de la face arrière 137 de la palette avant 3 forme une butée qui coopère avec une face avant 138 correspondante de la palette arrière 7 lorsque la palette arrière 7 est en position active ou intermédiaire de serrage.

Par ailleurs, la palette arrière 7 comporte des découpures 139 et 141 (voir figure 2) permettant d'alléger le poids de la pédale 1 et servant également à l'évacuation de graviers qui se sont éventuellement incrustés dans la semelle de la chaussure 12.

Le cale-pied arrière 9 est fixé à la palette arrière 7 par deux vis 143 traversant des lumières allongées 145 ménagées dans la palette arrière 7 (voir aussi figure 3) afin de permettre d'ajuster la position du cale-pied arrière 9 à des chaussures 12 de tailles différentes.

De plus, comme on le voit sur cette figure 3, la pédale 1 comprend un premier catadioptre 147 monté dans un support 149 porté par la palette avant 3 et servant également à bloquer les lanières de cale-pieds et un second catadioptre 151 monté dans un logement réalisé à l'extrémité libre de la palette arrière 7 afin que la pédale 1 réponde aux normes de sécurité pour la circulation sur des routes publiques.

Afin de pouvoir engager facilement la chaussure dans le cale-pied avant 5 de la pédale, celle-ci comprend, représentés sur la figure 6, des moyens 160 de blocage de l'arbre 21 de roulement pour maintenir la pédale 1 dans une position angulaire fixe par rapport à l'arbre de roulement 21 et donc par rapport à la manivelle non représentée du pédalier. Ces moyens 160 sont formés par un ressort hélicoïdal 162 de blocage logé dans un élargissement 164 de l'embase 13. L'extrémité d'une spire terminale 166 du ressort 162 est fixée dans un évidement 168 de l'embase 13 et l'extrémité de l'autre spire terminale 170 coopère avec une butée 172 d'un levier de commande 174 faisant saillie de la palette avant 3 à travers une ouverture 176 ménagée dans celle-ci.

A l'état de repos, c'est-à-dire quand le levier 174 dépasse de la surface de la palette avant 3, le diamètre intérieur des spires du ressort 162 est sensiblement égal au diamètre extérieur de l'arbre 21 de sorte que la pédale est bloquée en rotation par le frottement des spires contre l'arbre 21 dans un sens de rotation. Pour une pédale gauche, on utilisera un ressort 162 à enroulement à gauche et pour une pédale à droite, on utilisera un ressort 162 à enroulement à droite. A l'état de repos, le ressort 162 frotte contre l'arbre 21 de roulement. Dans un sens de rotation, ce frottement contribue à resserrer le ressort et bloque ainsi l'arbre 21 de roulement de sorte que la pédale 1 est maintenue dans une position angulaire fixe par la force de gravité qui contrebalance la force de frottement. Dans l'autre sens, la pédale peut tourner quasi librement ce qui permet d'ajuster la position angulaire de la pédale 1 pour pouvoir la chausser.

Lorsqu'une chaussure en appui sur la palette avant 3 abaisse le levier 174, le diamètre intérieur des spires du ressort 162 augmente ce qui permet à l'arbre 21 de tourner librement dans les deux sens de rotation.

Ainsi que cela est représenté sur la figure 1, le cale-pied avant 3 comporte des lanières 180 fixées de façon réglable en longueur par des vis à la palette avant 3. Avantageusement, les lanières 180 se croisent par en dessous pour assurer une bonne tenue et pour permettre une adaptation facile aux chaussures utilisées (voir figure 7).

De plus, en référence à la figure 2, la palette avant 3 comprend, dans sa face destinée à être en contact avec la chaussure, des rainures 182 pour renforcer la transmission de force entre la chaussure 12 et la palette 3.

On décrira ci-après le fonctionnement de la pédale de vélo 1 selon l' invention.

Les figures 1, 3 et 10A montrent la pédale 1 en position active de serrage d'une chaussure 12 par les cale-pieds avant 5 et arrière 9. Comme on le voit sur la figure 3, dans cette position active, l'extrémité de la banche de retenue 113 du ressort 105 en forme de U est retenue par le taquet 115 et l'extrémité de la branche d'appui 117 coopère avec l'encoche 123 ménagée dans l'extrémité libre 120 du levier 85 de la palette arrière 7 de sorte que celle-ci est maintenue dans la position relevée. Grâce au fait que la palette avant 3 et la palette arrière 7 font un angle qui correspond à peu près la cambrure du pied, et grâce aux cale-pieds avant 5 et arrière 9, l'effort exercé par le cycliste est transmis d'une manière très efficace à la manivelle du pédalier du vélo.

Bien entendu, dans cette position active, l'arbre de roulement 21 peut tourner librement du fait que le levier 174 est en position abaissée par la chaussure engagée dans le cale-pied avant 3 et agrandit le diamètre des spires du ressort 162 enroulé autour de l'arbre de roulement 21.

Pour déchausser la pédale 1, l'utilisateur exerce un mouvement de pivotement sur la palette arrière 7 autour de l'axe 29 de pivotement pour déplacer celle-ci angulairement par rapport à la palette avant 3. Ce mouvement est indiqué par la flèche 190 sur la figure 7 et représenté de façon simplifiée sur la figure 10C. Le mouvement de pivotement provoque un dégagement du levier de basculement 85 de l'extrémité de la branche d'appui 117 du ressort 105. L'extrémité de la spire terminale 127 du ressort 125 qui appuie sur la palette arrière 7 amorce alors un basculement de la palette arrière 7 vers le bas autour de l'axe 33 de basculement et la palette arrière 7 se retrouve dans la position abaissée montrée sur les figures 8 et 10D. Lorsque la palette arrière 7 est en position abaissée, le cale-pied arrière 9 libère le talon de la chaussure 12 et le cycliste peut retirer sa chaussure du cale-pied avant 5 pour descendre du vélo. Une fois libérée, la force élastique de l'extrémité de la spire terminale 129 du ressort 125 rappelle angulairement la palette arrière 7 par rapport à la palette avant 3 et aligne par conséquent l'axe d' articulation25 et l'axe de basculement 33.

Ainsi qu'on le voit sur les figures 7 et 10E, pour rechausser une pédale 1 selon l'invention, l'utilisateur engage sa chaussure d'abord dans le cale-pied avant 5 . Il induit avec son avant-pied un mouvement de basculement de la palette avant 3 vers le haut de sorte que l'extrémité de la branche de retenue 113 du ressort 105 se désengage du taquet 115 et que l'extrémité de la branche d'appui 117 glisse sur la partie arrondie de l'extrémité libre 120 du levier 85 et est déviée par celle-ci jusqu'à ce que l'extrémité de la branche d'appui 117 soit ramenée au-dessus du levier 85 et revienne se loger dans l'encoche 123. Dans cette position intermédiaire de serrage montrée sur les figures 9 et 10E, les moyens 83 d'embrayage sont alors activés et assurent le positionnement des palettes avant 3 et arrière 7. Ensuite, l'utilisateur appuie sur la palette avant 3 de sorte que l'extrémité de la branche d'appui 117 appuie sur l'extrémité libre 120 du levier 85 qui exerce alors un couple sur la palette arrière 7 de telle sorte que l'ensemble palette avant 3/palette arrière 7 soit ramené dans la position active. Cet appui sur la palette avant 3 est exercé jusqu'à ce que l'extrémité de la branche de retenue 113 vienne s'enclencher sur le taquet 115 de l'embase 13.

On voit que la pédale selon l'invention permet non seulement de transmettre d'une façon très efficace la force d'un coureur cycliste à un pédalier mais permet aussi de déchausser et de rechausser une telle pédale rapidement sans avoir recours à des opérations manuelles. De plus, par exemple lors d'une course du type duathlon et triathlon, le coureur peut bloquer la position angulaire de la pédale sur l'arbre 21 afin de pouvoir la chausser le plus rapidement possible.

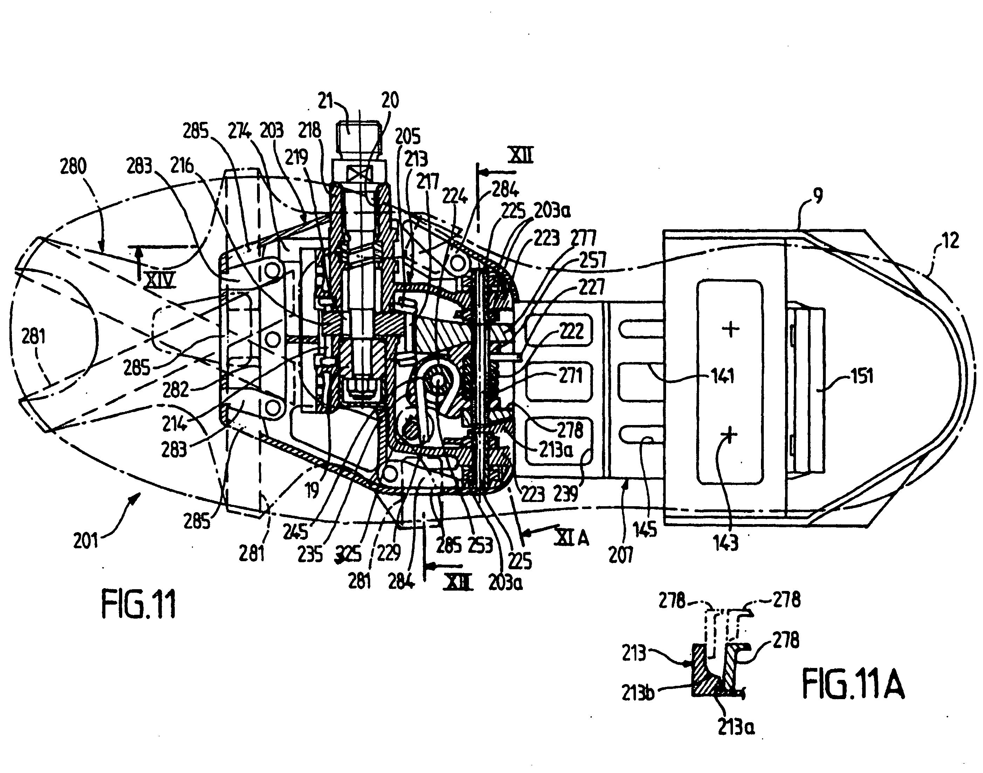

Sur les figures 11 à 21, est représenté un deuxième mode de réalisation d'une pédale de vélo 201 selon l'invention, qui comprend une palette avant 203 portant un cale-pied avant 280 représenté en traits mixtes, et une palette arrière 207 portant un cale-pied arrière 9, les palettes avant et arrière étant reliées l'une à l'autre par une embase de liaison 213.

L'embase 213 comporte à son extrémité avant une partie tubulaire 218 s'étendant transversalement, dans laquelle est logé un palier de roulement radial et axial 19 et une bague autolubrifiante 20 pour un arbre de roulement 21 qui est monté à rotation à l'intérieur de la partie tubulaire 218.

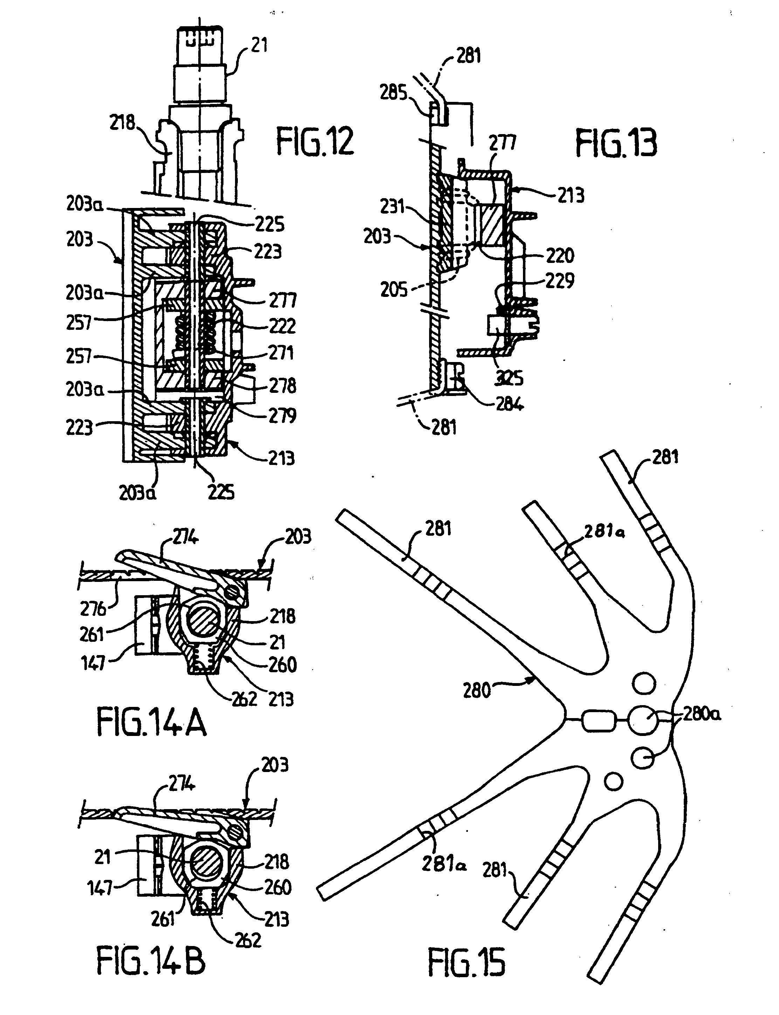

Cette partie tubulaire 218 se prolonge vers l'arrière de l'embase 213 par deux paires de bras latéraux espacés parallèles entre eux 223 (voir figure 12), à travers lesquelles paires de bras est ajusté un bout d'axe respectif 225 qui sert pour l'articulation de l'embase 213 par rapport à la palette avant 203 . Les bouts d'axe 225 sont pris en chape respectivement entre deux paires de projections 203a qui font saillie vers le bas à partir du dessous de la palette avant 203. Les projections 203a de chaque paire sont alternativement intercalées entre les bras 223 de chaque paire de bras de l'embase 213. Les bras latéraux 223 de l'embase 213 peuvent être réunis à leur extrémité arrière par une branche transversale, comme représenté en traits interrompus sur le mode de réalisation de la figure 4.

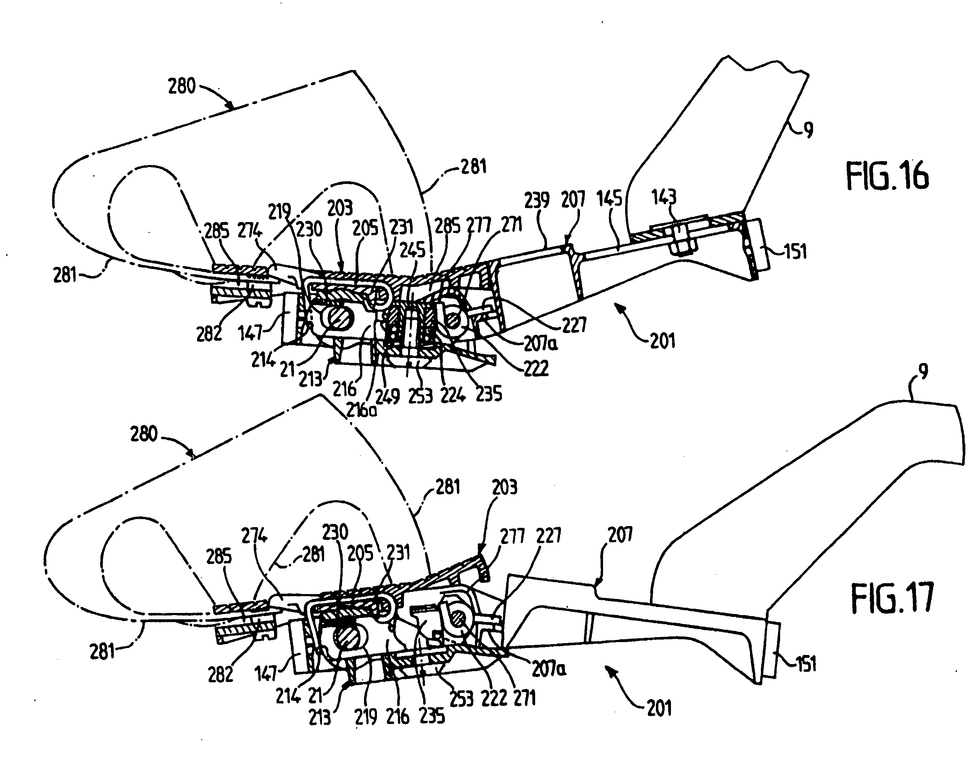

Entre les bras latéraux 223, l'embase 213 supporte sur son fond une noix d'articulation 235 qui présente un alésage central sensiblement vertical dans lequel est logé un manchon 245 avec une liberté en rotation autour de l'axe vertical, ce manchon 245 étant intérieurement fileté pour recevoir à vissage une vis 253 introduite par le dessous du fond de l'embase 213 pour servir d'axe de pivotement angulaire de la palette arrière 207 par rapport à l'embase 213. Comme mieux visible sur la figure 16, une rondelle anti-usure 249 est intercalée entre le fond de l'embase 213 et la noix 235 avec son manchon central 245. L'assemblage de cette noix d'articulation 235 sur l'embase 213 est décrit plus en détail dans le premier mode de réalisation en référence à la figure 5A. La noix d'articulation 235 porte deux bras parallèles 257 s'étendant vers l'arrière et qui sont destinés à être traversés par un tronçon du tube transversal 271 servant d'axe de basculement de la palette arrière 207 par rapport à l'embase 213. Les deux bras 257 de la noix d'articulation 235 sont pris en chape entre deux branches parallèles 277 et 278 de la palette arrière 207, lesquelles branches 277 et 278 sont traversées par les extrémités terminales du tube d' articulation 271. L'agencement général du tube d' articulation 271 est décrit plus en détail en référence au tube 71 sur la figure 4 du premier mode de réalisation.

L'axe vertical de la noix d'articulation 235 sert d'axe de pivotement angulaire, dans un plan sensiblement horizontal passant par le tube 271, de la palette arrière 207 par rapport à l'embase 213. Ce débattement angulaire est autorisé par un espace libre 279 (voir figure 12) entre l'extrémité extérieure du tube 271 et l'extrémité en vis-à-vis du bout d'axe 225.

Entre les deux bras 257 de la noix d'articulation 235 est logé un ressort hélicoïdal 222 monté coaxialement sur le tube 271 et comportant une spire d'extrémité 227 qui prend appui sur une surface plane 207a de la palette arrière 207, comme illustré sur la figure 16. Ce ressort 222 constitue un moyen élastique d'amorçage du mouvement de basculement de la palette arrière 207 entre sa position relevée de serrage de la chaussure 12, comme illustré sur les figures 11 et 16, et sa position abaissée pour le déchaussement illustrée sur la figure 17.

Dans la noix d' articulation 235, est logé autour du manchon central 245 un ressort en épingle 224 dont un brin d'extrémité 229 dépasse hors de la noix d'articulation 235 pour venir coopérer avec un excentrique 325, qui est agencé réglable en rotation pour régler la force de rappel exercée par ledit brin d'extrémité 229 sur la noix d' articulation 235. Ce ressort en épingle 224 sert de moyen élastique de rappel angulaire de la palette arrière 207 entre sa position angulaire décalée et sa position angulaire alignée avec la palette avant 203, car l'excentrique 325 est porté par le fond de l'embase 213 (voir figure 13) et la noix d'articulation 235 est solidaire en rotation de la palette arrière 207. Dans ce deuxième mode de réalisation, le ressort d'amorçage 222 et le ressort de rappel angulaire 224 sont dissociés, contrairement au premier mode de réalisation où un ressort unique 125 est prévu pour assurer les deux fonctions.

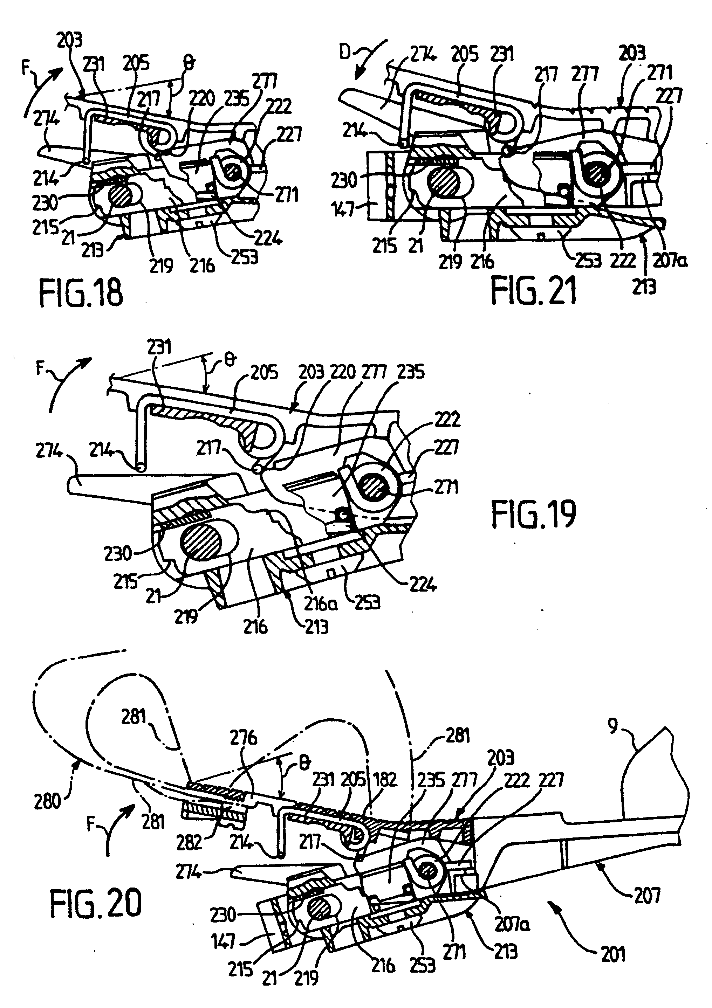

La pédale 201 comporte en outre des moyens d'accouplement débrayables de la palette avant 203 sur la palette arrière 207. Ces moyens d'accouplement sont constitués d'un ressort 205 de forme sensiblement rectangulaire en vue de dessus sur la figure 11, dont une branche transversale d'extrémité 214 est recourbée sensiblement en U vers le bas pour servir de moyen de retenue coopérant avec un taquet d'accrochage 215 prévu sur un coulisseau 216, et dont l'extrémité opposée est spiralée et se termine par une branche transversale 217 recourbée en U vers le bas et qui vient en appui dans une encoche 220 prévue à l'extrémité libre de la branche 277 de la palette arrière 207. Le coulisseau 216 est monté mobile en direction longitudinale sur l'embase 213 et présente une ouverture oblongue 219 débouchant dans la direction transversale, de façon à être traversée par l'arbre de roulement 21. Un ressort 230 est prévu en appui, à une extrémité, contre l'embase 213, et à son extrémité opposée contre le coulisseau 216, de façon à assurer le recul dans la direction longitudinale du coulisseau 216, par rapport à l'arbre de roulement 21, lorsque le taquet d'accrochage 215 est libéré de la branche de retenue 214 du ressort d'accouplement 205 (mieux représenté sur la figure 19). Le corps central du ressort d'accouplement 205 est retenu contre la face inférieure de la palette avant 203 par une pièce de fixation 231. L'extrémité spiralée du ressort 205 se terminant par la branche transversale 217 permet d'assurer une force élastique d'appui suffisante sur l'encoche 220 de la branche 277 de la palette arrière 207, pour maintenir la cambrure entre la palette avant 203 et la palette arrière 207.

En se référant maintenant aux figures 11 et 11A, on voit que l'embase 213 comporte une butée basse 213a au voisinage de son fond se prolongeant vers l'extérieur et vers le haut par une rampe de guidage 213b, ce qui permet à la branche 278 de la palette arrière 207, après pivotement angulaire entre les deux positions indiquées en traits mixtes, de suivre la rampe 213b jusqu' à venir en vis-à-vis de la butée basse 213a, pour assurer un alignement correct de la palette arrière 207 avec la palette avant 203, après que la palette arrière 207 ait été rappelée en position alignée par le ressort de rappel angulaire 224.

Sur la figure 16, on voit que le catadioptre avant 147 est monté sur l'embase 213, contrairement au premier mode de réalisation où le catadioptre avant 147 est monté sur un support porté par la palette avant 3. Le catadioptre arrière 151 est également monté dans un logement réalisé à l'extrémité arrière de la palette arrière 207.

Sur la figure 11, on voit que la palette arrière 207 comporte trois logements 239, au lieu du logement unique 139 du premier mode de réalisation, pour permettre une évacuation plus facile des graviers, et pour alléger la pédale.

Afin de pouvoir engager plus facilement la chaussure 12 dans le cale-pied avant 280 de la pédale, on prévoit dans la portion tubulaire 218 de l'embase 213, une noix d'articulation 260 comportant une ouverture oblongue débouchant dans la direction transversale, de façon à être traversée par l'arbre de roulement 21, la base de la noix d' articulation 260 étant en appui contre un ressort de compression 262 logé à l'intérieur de la partie tubulaire 218. La partie supérieure de la noix d'articulation 260 est en appui contre un levier de blocage 274 qui fait saillie, au repos, à travers une ouverture 276 ménagée dans la palette avant 203, comme mieux représentée sur les figures 14A et 14B. Au repos, c'est-à-dire lorsque le levier 274 dépasse au-dessus de la surface supérieure de la palette avant 203, l'arbre de roulement 21 est en contact frottant avec la surface interne inférieure de l'ouverture oblongue 261 de la noix d'articulation 260, de façon à bloquer en rotation par frottement la pédale 201 par rapport à l'arbre de roulement 21. Lorsqu'une chaussure 12 est en appui sur la palette avant 203, le levier 274 est abaissé, ce qui repousse la noix d'articulation 260 à l'encontre du ressort de compression 262, et amène la noix d'articulation 260 dans une position où l'arbre de roulement 21 peut librement tourner par rapport à l'ouverture oblongue 261. Ainsi, contrairement au premier mode de réalisation, on peut utiliser le même système de blocage pour une pédale gauche comme pour une pédale droite.

Le cale-pied avant 280, comme représenté sur la figure 15, présente à plat, sensiblement une forme en pieuvre dont le corps central est percé de plusieurs ouvertures 280a pour assurer une certaine flexibilité au cale-pied avant en plastique 280, ledit corps central s'étendant sensiblement radialement par une pluralité de lanières 281 qui sont destinées à venir se fixer sur le dessous de la palette avant 203. Comme visible sur la figure 11, les deux lanières centrales 281 chevauchent l'avant de la chaussure 12, se croisent sur le dessous de la chaussure 12 et sont retenues par une barre transversale 282 qui comporte à chacune de ses extrémités transversales une pince de serrage articulée 283 pour pincer des lanières ou sangles intermédiaires 281. A l'amère de la palette avant 203, sont également prévues latéralement deux autres pinces de fixation 284 pour venir pincer les lanières arrière 281 du cale-pied 280. Comme visible sur la figure 11, la palette avant 203 comporte sur la périphérie de sa paroi latérale des ouvertures 285 pour permettre l'insertion des lanières 281 à l'intérieur de la palette avant 203, alors que dans le premier mode de réalisation, des simples encoches sont prévues pour la fixation des lanières. Chaque lanière 281 comporte des 281a pour indiquer différentes positions de réglage en fonction de la pointure de la chaussure.

On va maintenant décrire le fonctionnement de la pédale de vélo 201 en se référant aux figures 16 à 21.

Dans la position active de serrage de chaussure illustrée sur la figure 16, le talon de la chaussure est pris dans le cale-pied arrière 9 et la pointe du pied est prise dans le cale-pied avant 280. Dans cette position, le levier de blocage 274 est enfoncé, ce qui permet la libre rotation de l'arbre de roulement 21 par rapport à la pédale 201. Dans cette position active, la branche transversale avant 214 du ressort d'accouplement 205 est en prise avec le taquet d'accrochage 215 du coulisseau 216, ce qui empêche un mouvement de basculement vers le haut de la palette avant 203 par rapport à l'embase 213, alors que la branche transversale arrière opposée 217 du ressort d'accouplement 205 est en appui dans l'encoche 220 prévue à l'extrémité libre avant de la branche 277 de la palette arrière 207, ce qui bloque en position relative la palette arrière avec un angle de cambrure par rapport à la palette avant, pour correspondre à la position du pied lorsque le cycliste exerce un effort sur la pédale. Dans cette position, les palettes avant et arrière sont alignées l'une avec l'autre. Le taquet 215 du coulisseau 216 retient la branche transversale 214 du ressort d'accouplement 205, même lorsque l'avant-pied exerce un mouvement de basculement de la palette avant vers le haut, par exemple lorsque le cycliste se met en danseuse. Ceci n'est pas forcément le cas dans le premier mode de réalisation où le taquet 115 est agencé pour permettre le dégagement de la branche 113 du ressort 105, lorsque le cycliste exerce un mouvement de basculement de la palette avant 3 vers le haut avec son avant-pied. Le taquet 115 du premier mode de réalisation doit permettre un tel dégagement, pour repousser le coulisseau vers l'arrière, alors que dans le deuxième mode de réalisation, c' est le ressort de recul 230 qui assure le recul du coulisseau 216. Dans le deuxième mode de réalisation, l'extrémité libre de la branche 277 de la palette arrière 207 vient en appui contre le bord arrière 216a du coulisseau 216 (voir figure 19), pour bloquer l'effort de recul exercé par le ressort 230 sur le coulisseau 216, alors que dans le premier mode de réalisation l'extrémité libre 120 du levier 85 vient simplement maintenir le coulisseau dans une position où le taquet 115 coopère avec la branche 113 du ressort 105.

Pour déchausser, le cycliste exerce avec son talon un mouvement de pivotement angulaire sur la palette arrière 207, autour de l'axe de pivotement 253, ce qui a pour effet de dégager la branche transversale 217 du ressort d'accouplement 205 de l'encoche 220 prévue sur la branche 277 de la palette arrière 207. Ainsi, la palette arrière 207 est débrayée de la palette avant 203 au cours de ce mouvement de pivotement angulaire de la palette arrière 207, et le ressort d'amorçage 222 exerce par sa spire d'extrémité 227 un effort dirigé vers le bas sur la surface 207a de la palette arrière 207, provoquant son déplacement de la position relevée illustrée sur la figure 16 à sa position abaissée représentée sur la figure 17. Lorsque la palette arrière 207 est en position abaissée, le cale-pied arrière 9 libère le talon de la chaussure 12 et le cycliste peut ensuite retirer sa chaussure du cale-pied avant, pour descendre du vélo. A la fin de la course de pivotement angulaire de la palette arrière 207, le ressort de rappel 224 exerce une force élastique de rappel par son brin d'extrémité 229 sur l'excentrique 225 pour rappeler la palette arrière 207 en alignement avec la palette avant 203. Au cours de ce mouvement de rappel angulaire, comme illustré sur la figure 11A, la branche 278 de la palette arrière 207 suit la rampe 213b de l'embase 213 et vient contre le fond de l'embase 213, en face de la butée 213a qui assure un alignement correct de la palette arrière 207 par rapport à la palette avant 203, et empêche tout mouvement de pivotement angulaire ultérieur.

La palette arrière 207 ayant basculé vers le bas autour de l'axe 271, sa branche 277 a basculé vers le haut, libérant ainsi le coulisseau 216 qui subit un mouvement de recul vers l'arrière sous l'effet du ressort de recul 230, l'arbre de roulement 21 étant ici à l'extrémité gauche de l'ouverture oblongue 219 du coulisseau 216, alors qu'il était du côté de l'extrémité droite de cette ouverture sur la figure 16. Le coulisseau 216 ayant reculé, la branche transversale 214 du ressort d'accouplement 205 est libérée du taquet 215, ce qui permettra le mouvement de basculement vers le haut de la palette avant 203 comme expliqué ci-dessous.

Dans le cas où le cycliste a exercé le mouvement de pivotement angulaire de la palette arrière 207, alors qu'il roulait, dans un mouvement réflexe à la vue d'un danger, mais qu'il souhaite à nouveau rechausser la pédale 201, sans descendre du vélo ni manipuler à la main la pédale, il exerce d'abord avec son avant-pied un mouvement de basculement vers le haut dans la direction de la flèche F, sur la palette 203 autour de l'axe 271, comme illustré sur les figures 18 à 20. Au cours de ce mouvement de basculement vers le haut de la palette avant 203, cette palette avant 203 se déplace d'abord sur une première course angulaire de l'ordre de 22°, comme indiqué schématiquement par l'angle □sur la figure 18, cette première course angulaire de la palette avant 203 correspondant à la remontée de la branche transversale 217 du ressort d'accouplement 205, jusqu'à l'extrémité avant de la branche 277 de la palette arrière 207. Puis, le mouvement de basculement vers le haut de la palette 203 se poursuit sur un angle □global d'environ 26°, ce qui correspond au départ de l'enclenchement de la branche 217 avec l'encoche 220 de la branche 277, comme illustré sur la figure 19.

A partir de cette position, la branche transversale 217 du ressort d'accouplement 205 vient s'enclencher automatiquement dans l'encoche 220 de la branche 277, même si le cycliste ne tire pas complètement vers le haut la palette avant 203. La position finale d'enclenchement est représentée sur la figure 20, dans laquelle la course angulaire totale **□** est d'environ 28°. Tout au long de ce mouvement angulaire, le coulisseau 216 est resté dans sa position reculée, ce qui permet à la branche 214 du ressort 205 de monter.

Enfin, lorsque le cycliste repousse avec son avant-pied la palette avant 203 vers le bas, dans la direction de la flèche D, la branche transversale 217 du ressort d'accouplement 205 vient repousser vers le bas la branche 277 de la palette arrière 207, jusqu'à ce que l'extrémité libre avant de ladite branche 277 vienne en appui contre le bord arrière 216a du coulisseau 216 et le repousse par effet de came vers l'avant, à l'encontre du ressort de recul 230, pour que la branche transversale avant 214 du ressort d'accouplement 205 puisse s'enclencher sur le taquet 215. La pédale 201 reprend alors la position illustrée sur la figure 16. Le bord arrière 216a du coulisseau 216 présente un rebord saillant pour faciliter la coopération avec l'extrémité libre de la branche 277 de la palette arrière 207.

Bien que l'invention ait été décrite en liaison avec deux modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, quelle que défini dans les revendications.

## Revendications

1. Pédale de vélo (1, 201) destinée à être reliée à une manivelle d'un pédalier et comprenant une palette avant (3, 203) portant un cale-pied avant (5, 280) et une palette arrière (7, 207) portant un cale-pied arrière (9), des moyens (11) d'accouplement de la palette arrière à la palette avant dans une position active de serrage d'une chaussure (12) par les cale-pieds avant et arrière et des moyens (121) de débrayage desdits moyens d'accouplement de la position active vers une position inactive de la palette arrière, **caractérisée en ce qu'**elle comporte en outre des moyens (81) pour ramener la palette arrière (7, 207) en position active par action sur la palette avant (3, 203).

2. Pédale de vélo selon la revendication 1, **caractérisée en ce que** les moyens (81) pour ramener la palette arrière (7, 207) en position active comprennent des moyens (83) d'embrayage des moyens (11) d'accouplement assurant un positionnement relatif des palettes avant (3, 203) et arrière (7, 207) dans une position intermédiaire de serrage de la chaussure par les cale-pieds avant (5, 280) et arrière (9).

3. Pédale de vélo selon la revendication 2, **caractérisée en ce que** les moyens (81) pour ramener la palette arrière (7, 207) en position active par action sur la palette avant (3, 203) comprennent en outre des moyens (88) d'entraînement angulaire de l'ensemble palette avant/palette arrière (3, 203, 7, 207) solidarisés par les moyens (83) d'embrayage, par action sur la palette avant de la position intermédiaire vers ladite position active et des moyens (89) de maintien dudit ensemble dans ladite position active.

4. Pédale de vélo selon la revendication 3, **caractérisée en ce que** lesdits moyens (11) d'accouplement comprennent une embase (13, 213) comportant un arbre (21) de roulement destiné à être fixé à la manivelle du pédalier, des moyens (15) d'articulation de la palette avant (3, 203) sur l'embase (13, 213) suivant un axe (25, 225) d'articulation sensiblement parallèle à l'arbre (21) de roulement et distant de celui-ci, la palette avant (3, 203) étant déplaçable autour de son axe (25, 225) d'articulation entre une première position dans laquelle la palette avant (3, 203) est en appui sur l'embase (13, 213), et une seconde position dans laquelle la palette avant active lesdits moyens (83) d'embrayage et des moyens (17) de liaison entre la palette arrière (7, 207) et l'embase (13, 213).

5. Pédale de vélo selon la revendication 4, **caractérisée en ce que** les moyens (89) de maintien comprennent des moyens (91, 214) élastiques de retenue de la palette avant (3, 203) sur l'embase (13, 213) pour maintenir celle-ci dans ladite première position d'appui sur l'embase.

6. Pédale de vélo selon la revendication 4 ou 5, **caractérisée en ce que** les moyens (17) de liaison entre la palette arrière (7, 207) et l'embase (13, 213) comportent des moyens (27, 235) de pivotement de la palette arrière (7, 207) autour d'un axe (29, 253) de pivotement sensiblement perpendiculaire à un plan contenant l'arbre (21) de roulement et l'axe (25, 225) d' articulation, et des moyens (31, 222) de basculement de la palette arrière (7, 207) autour d'un axe (33, 271) de basculement sensiblement orthogonal à l'axe (29, 253) de pivotement pour permettre un mouvement basculant de la palette arrière (7, 207) entre une position relevée dans laquelle la palette arrière est dans sa position active et une position abaissée dans laquelle la palette arrière est dans sa position inactive ou dans sa position intermédiaire.

7. Pédale de vélo selon la revendication 6, **caractérisée en ce que** les moyens (88) d'entraînement angulaire de l'ensemble palette avant/palette arrière comprennent les moyens (15) d'articulation de la palette avant (3, 203) sur l'embase (13, 213) et les moyens (31, 222) de basculement de la palette arrière autour de l'axe (33, 271) de basculement, l'axe (25, 225) d'articulation de la palette avant (3, 203) sur l'embase (13, 213) et l'axe (33, 271) de basculement de la palette arrière étant sensiblement alignés lorsque les palettes avant et arrière sont solidarisées par les moyens (83) d'embrayage pour permettre un déplacement angulaire de l'ensemble palette avant/arrière de la position intermédiaire vers ladite position active.

8. Pédale de vélo selon la revendication 7, **caractérisée en ce que** lesdits moyens (83) d'embrayage desdits moyens (11) d'accouplement comprennent un levier (85, 277) de basculement solidaire de la palette arrière (7, 207), et portés par la palette avant (3, 203), des moyens élastiques (87, 217) d'appui sur le levier (85, 277) de basculement pour solidariser la palette avant par rapport à la palette arrière.

9. Pédale de vélo selon la revendication 8, **caractérisée en ce que** les moyens (87, 217) élastiques d'appui et les moyens (91, 214) élastiques de retenue sont formés par un ressort (105, 205) dont la partie centrale (107) est fixée contre la face de la palette avant (3, 203) en regard de l'embase, ce ressort (105, 205) comprenant une branche de retenue (113, 214) dont l'extrémité libre coopère, dans la position active de serrage d'une chaussure (12), avec un taquet (115, 215) de retenue porté par l'embase (13, 213), et une branche (117, 217) d'appui dont l'extrémité appuie, dans la position active ou intermédiaire de serrage d'une chaussure (12), sur le levier (85, 277) de basculement.

10. Pédale de vélo selon la revendication 9, **caractérisée en ce que** le taquet de retenue (115, 215) est formé sur un coulisseau (216) déplaçable dans la direction longitudinale sur l'embase (13, 213), ledit coulisseau (216), dans la position active de serrage, coopérant par son taquet avec la branche de retenue (113, 214) du ressort (105, 205) et étant bloqué en translation par le levier de basculement (85, 277) de la palette arrière (7, 207), alors que dans la position intermédiaire de serrage, le taquet du coulisseau est libéré de la branche de retenue du ressort qui se trouve dans la seconde position de la palette avant, et le coulisseau est en position reculée dégagée du blocage du levier de basculement (85, 277) qui se trouve dans la position abaissée de la palette arrière.

11. Pédale de vélo selon la revendication 10, **caractérisée en ce que** le coulisseau (216) est muni d'un moyen élastique de recul (230) pour provoquer le recul du coulisseau, lorsque la pédale est en position inactive, le coulisseau étant alors dégagé du blocage du levier de basculement (277) qui se trouve dans la position abaissée de la palette arrière, le recul du coulisseau provoquant simultanément la libération de l'emprise du taquet par rapport à la branche de retenue (214) du ressort (205) qui se trouve dans la première position de la palette avant.

12. Pédale de vélo selon l'une des revendications 9 à 11, **caractérisée en ce que** le levier (85, 277) de basculement comprend une extrémité libre (120) arrondie pour permettre à la branche d'appui (117, 217) du ressort (105, 205) de glisser sur cette extrémité (120) arrondie lors de l'embrayage desdits moyens (11) d'accouplement, et une encoche (123, 220) proche de cette extrémité libre (120) et destinée à coopérer avec ladite extrémité de ladite branche d'appui (117, 217) dans la position active ou intermédiaire de serrage d'une chaussure (12).

13. Pédale de vélo selon la revendication 12, **caractérisée en ce que** l'extrémité libre du levier de basculement (277) est apte à provoquer l'embrayage automatique de la branche d'appui (217) du ressort (205) dans l'encoche (220) sensiblement en fin de course angulaire (□ de la palette avant (203) entre ses première et seconde position.

14. Pédale de vélo selon l'une des revendications 6 à 13, **caractérisée en ce que** l'embase (213) comporte une butée basse (213a) coopérant avec la palette arrière (207) lorsqu'elle est en position abaissée, pour assurer un alignement correct de la palette arrière (207) par rapport à la palette avant (203), en position inactive ou intermédiaire de serrage de la chaussure (12).

15. Pédale de vélo selon la revendication 14, **caractérisée en ce que** l'embase (213) comporte une rampe de guidage (213b) pour guider la palette arrière (207) vers la butée basse (213a) lorsqu'elle est déplacée de sa position angulairement décalée par rapport à la palette avant (203) vers sa position abaissée où elle est alignée avec la palette avant (203).

16. Pédale de vélo selon l'une quelconque des revendications 5 à 15, **caractérisée en ce que** lesdits moyens (11) d'accouplement comprennent en outre des moyens (124, 224) élastiques de rappel angulaire de la palette arrière (7, 207) par rapport à la palette avant (3, 203).

17. Pédale de vélo selon l'une quelconque des revendications 5 à 16, **caractérisée en ce que** les moyens (121) de débrayage des moyens (11) d'accouplement comprennent lesdits moyens (17) de liaison entre la palette arrière (7, 207) et l'embase (13, 213).

18. Pédale selon la revendication 17, **caractérisée en ce que** les moyens (121) de débrayage comprennent en outre des moyens (122, 222) élastiques d'amorçage du mouvement basculant de la palette arrière (7, 207) vers la position abaissée.

19. Pédale de vélo selon la revendication 18, **caractérisée en ce que** les moyens (124) élastiques de rappel angulaire de la palette arrière (7) par rapport à la palette avant (3) et les moyens (122) élastiques d'amorçage du mouvement basculant de la palette arrière (3) comprennent un ressort (125) hélicoïdal disposé autour de l'axe (33) de basculement et dont une spire d'extrémité (127) est en appui sur la palette arrière (7) et dont l'autre spire d'extrémité (129) est en appui sur l'embase (13) pour rappeler angulairement la palette arrière (7) par rapport à la palette avant (3).

20. Pédale selon la revendication 18, **caractérisée en ce que** le moyen élastique de rappel angulaire (224) comprend un ressort en épingle disposé autour de l'axe de pivotement (253) et dont un brin d'extrémité (229) est en appui sur l'embase (213) et le moyen élastique d'amorçage (222) comprend un ressort hélicoïdal disposé autour de l'axe de basculement (271) et dont une spire d'extrémité (227) est en appui sur la palette arrière (207) .

21. Pédale de vélo selon la revendication 19 ou 20, **caractérisée en ce que** l'extrémité (129, 229) du ressort de rappel angulaire (124, 224) en appui sur l'embase (13, 213) coopère avec un excentrique (135, 325) porté par l'embase et réglable en rotation pour régler la force élastique exercée par ladite extrémité (129,229) en appui sur l'embase.

22. Pédale de vélo selon l'une quelconque des revendications de 1 à 21, **caractérisée en ce qu'**en position active de serrage d'une chaussure, la palette avant (3, 203) et la palette arrière (7, 207) font un angle compris entre 10° et 20°, et notamment de 15°.

23. Pédale de vélo selon l'une quelconque des revendications de 1 à 22, **caractérisée en ce que** la palette avant (3, 203) comprend dans sa face destinée à être en contact avec la chaussure des rainures (182) pour renforcer la transmission de force entre la chaussure (12) et la palette avant.

24. Pédale de vélo selon l'une des revendications de 1 à 23, **caractérisée en ce qu'** elle comprend des moyens (160, 260) de blocage de l'arbre (21) de roulement pour maintenir la pédale (1, 201), en absence d'une chaussure enfilée dans le cale-pied avant (5, 280) dans une position angulaire fixe par rapport à la manivelle, et des moyens (174, 274) de désactivation des moyens (160, 260) de blocage.

25. Pédale selon la revendication 24, **caractérisée en ce que** les moyens (160) de blocage comprennent un ressort de blocage (162) hélicoïdal serré autour de l'arbre (21) de roulement et fixé en rotation pour bloquer l'arbre de roulement par le frottement des spires du ressort (162) contre l'arbre (21) de roulement.

26. Pédale selon la revendication 25, **caractérisée en ce que** lesdits moyens de désactivation comprennent un levier (174) de commande articulé sur l'embase (13) et coopérant avec une spire terminale (170) du ressort (162) de blocage, le levier (174) de commande étant déplaçable entre une position de repos dans laquelle il dépasse, maintenu par la force élastique du ressort (162) de blocage, de la palette avant (3) à travers une ouverture (176) ménagée dans celle-ci et une position de désactivation dans laquelle il agrandit par appui sur ladite spire terminale (170) le diamètre de toutes les spires du ressort de blocage (162) pour rendre l'arbre de roulement libre en rotation.

27. Pédale selon la revendication 24, **caractérisée en ce que** les moyens de blocage comprennent une noix d'articulation (260) ayant une ouverture oblongue (261) débouchant transversalement, de façon à être traversée par l'arbre de roulement (21) et un ressort de blocage (262) sollicitant la noix d'articulation de façon que l'arbre de roulement soit bloqué par frottement contre la surface interne de l'ouverture oblongue.

28. Pédale selon la revendication 27, **caractérisée en ce que** lesdits moyens de désactivation comprennent un levier de commande (274) articulé sur l'embase (213) et coopérant avec la noix d'articulation (260); le levier de commande (274) étant déplaçable entre une position de repos dans laquelle il dépasse, sous l'action de la force élastique du ressort de blocage (262), de la palette avant (203) à travers une ouverture (276) ménagée dans celle-ci, et une position de désactivation dans laquelle le levier de commande (274) est escamoté dans la palette avant (203) et déplace la noix d'articulation dans une position où l'arbre de roulement (21) n'est plus en contact frottant avec l'ouverture oblongue (261).

29. Pédale selon la revendication 4, **caractérisée en ce qu'**elle comprend un premier catadioptre (147) porté par la palette avant (3, 203) ou l'embase (13, 213) et un second catadioptre (151) porté par la palette arrière (7, 207).

30. Pédale selon les revendications 1 à 29, **caractérisée en ce que** le cale-pied avant (280) présente une forme en pieuvre comportant un corps central muni d'une pluralité de lanières (281) qui viennent se fixer sur le dessous de la palette avant (203).

31. Pédale selon la revendication 30, **caractérisée en ce que** la palette avant (203) comporte sur sa paroi latérale périphérique des ouvertures (285) pour y insérer les extrémités libres des lanières (281) qui sont bloquées par des pinces de fixation (283, 284) articulées à l'intérieur de la palette avant (203).

## Patentansprüche

1. Fahrradpedal (1, 201), welches dazu vorgesehen ist, mit einer Pedalkurbel verbunden zu werden und welches eine vordere Platte (3, 203), die ein vorderes Fußpassstück (5, 280) trägt, und eine hintere Platte (7, 207), die ein hinteres Fußpassstück (9) trägt, Mittel (11) zur Kopplung der hinteren Platte mit der vorderen Platte in einer Aktivposition zum Festklemmen eines Schuhs (12) durch das vordere und hintere Fußpassstück und Mittel (121) zum Auskuppeln der zur Kopplung dienenden Mittel aus der Aktivposition im eine Inaktivposition der hinteren Platte umfasst, **dadurch gekennzeichnet, dass** das Fahrradpedal weiterhin Mittel (81) zum Mitnehmen der hinteren Platte (7, 207) in die Aktivposition durch Einwirkung auf die vordere Platte (3, 203) umfasst.

2. Fahrradpedal nach Anspruch 1, **dadurch gekennzeichnet, dass** die Mittel (81) zum Mitnehmen der hinteren Platte (7, 207) in die Aktivposition Mittel (83) zum Einkuppeln der zur Kopplung dienenden Mittel (11) aufweisen, die eine relative Positionierung der vorderen (3, 203) und hinteren (7, 207) Platten relativ zueinander in einer Zwischenposition zum Festklemmen des Schuhs durch das vordere (5, 280) und hintere (9) Fußpassstück sicherstellen.

3. Fahrradpedal nach Anspruch 2, **dadurch gekennzeichnet, dass** die Mittel (81) zum Mitnehmen der hinteren Platte (7, 207) in die Aktivposition durch Einwirkung auf die vordere Platte (3, 203) weiterhin Mittel (88) zum Winkelantrieb der Gesamtheit der vorderen Platte/hinteren Platte (3, 203, 7, 207) zusammen mit den zum Einkuppeln dienenden Mitteln (83) durch Einwirken auf die vordere Platte aus der Zwischenposition in die Aktivposition und Mittel (89) zum Festhalten der Gesamtheit in der Aktivposition umfassen.

4. Fahrradpedal nach Anspruch 3, **dadurch gekennzeichnet, dass** die zur Koppelung dienenden Mittel (11) umfassen: ein Basisteil (13, 213) mit einer Drehwelle (21), die dazu bestimmt ist an der Pedalkurbel befestigt zu werden und Mittel (15) zur Gelenkverbindung der vorderen Platte (3, 203) auf dem Basisteil (13, 213) entlang einer Gelenkverbindungsachse (25, 225), die etwa parallel zu der Drehwelle (21) und zu dieser beabstandet ist, wobei die vordere Platte (3, 203) um ihre Gelenkverbindungsachse (25, 225) verschiebbar ist zwischen einer ersten Position, in der die vordere Platte (3, 203) auf dem Basisteil (13, 213) abgestützt ist, und einer zweiten Position, in der die vordere Platte die zum Einkoppeln dienenden Mittel (83) und Mittel (17) zur Verbindung der hinteren Platte (7, 207) und des Basisteils (13, 213) aktiviert.

5. Fahrradpedal nach Anspruch 4, **dadurch gekennzeichnet, dass** die zum Festhalten dienenden Mittel (89) elastische Mittel (91, 214) zum Zurückhalten der vorderen Platte (3, 203) auf dem Basisteil (13, 213) umfassen, um diese auf dem Basisteil in der ersten Position der Abstützung festzuhalten.

6. Fahrradpedal nach Anspruch 4 oder 5, **dadurch gekennzeichnet, dass** die Mittel (17) zur Verbindung der hinteren Platte (7, 207) und des Basisteils (13, 213) Folgendes umfassen: Mittel (27, 235) zum verdrehen der hinteren Platte (7, 207) um eine Drehachse (29, 253), die etwa senkrecht zu einer die Drehwelle 21 und die Gelenkverbindungsachse (25, 225) beinhaltenden Ebene ist, und Mittel (31, 222) zum Kippen der hinteren Platte (7, 207) um eine Kippachse (33, 271), die etwa senkrecht zu der Drehachse (29, 253) ist, um eine Kippbewegung der hinteren Platte (7, 207) zwischen einer erhöhten Position, in der die hintere Platte in ihrer Aktivposition ist, und einer erniedrigten Position, in der die hintere Platte in ihrer Inaktivposition oder in ihrer Zwischenposition ist, zu ermöglichen.

7. Fahrradpedal nach Anspruch 6, **dadurch gekennzeichnet, dass** die Mittel (88) zum Winkelantrieb der Gesamtheit der Vorderplatte/Hinterplatte Folgendes umfassen: die Mittel (15) zur Gelenkverbindung der vorderen Platte (3, 203) auf dem Basisteil (13, 213) und die Mittel (31, 222) zum Kippen der hinteren Platte um die Kippachse (33, 271), wobei die Gelenkverbindungsachse (25, 225) der vorderen Platte (3, 203) auf dem Basisteil (13, 213) und die Kippachse (33, 271) der hinteren Platte nahezu miteinander ausgerichtet sind, wenn die vordere und hintere Platte durch die Mittel (83) zum Einkuppeln zusammengekuppelt sind, um eine Winkelbewegung der Gesamtheit vordere/hintere Platte aus der Zwischenposition in die Aktivposition zu ermöglichen.

8. Fahrradpedal nach Anspruch 7, **dadurch gekennzeichnet, dass** die Mittel (83) zum Einkuppeln der Mittel (11) zur Kopplung einen Kipphebel (85, 277), der mit der hinteren Platte (7, 207) verbunden ist und der zu der hinteren Platte (3, 203) geneigt ist, und elastische Mittel (87, 217) zum Abstützen auf dem Kipphebel (85, 277) zum Verbinden der vorderen Platte im Verhältnis zur hinteren Platte umfassen.

9. Fahrradpedal nach Anspruch 8, **dadurch gekennzeichnet, dass** die zum Abstützen dienenden elastischen Mittel (87, 217) und die zum Zurückhalten dienenden elastischen Mittel (91, 214) gebildet werden durch eine Feder (105, 205), deren Mittelteil (107) gegen die Seite der Vorderplatte (3, 203) in Bezug auf das Basisteil befestigt ist, wobei diese Feder (105, 205) einen Rückhaltearm (113, 214) umfasst, dessen freies äußerstes Ende in der Aktivposition zum Festklemmen eines Schuhs (12) zusammenwirkt mit einem Rückhaltekeil (115, 215), der durch das Basisteil (13, 213) getragen wird, und einen Abstützarm (117, 217), dessen äußerstes Ende zum Abstützen sich in der Aktivposition oder Zwischenposition zum Festklemmen eines Schuhs (12) auf dem Kipphebel (85, 277) abstützt.

10. Fahrradpedal nach Anspruch 9, **dadurch gekennzeichnet, dass** der Rückhaltekeil (115, 215) gebildet wird durch ein Führungsteil (216), das auf dem Basisteil (13, 213) in Längsrichtung verschiebbar ist, wobei das Führungsteil (216) in der Aktivposition zum Festklemmen mittels seines Keils mit dem Rückhaltearm (113, 214) der Feder (105, 205) zusammenwirkt und mittels des Kipphebels (85, 277) der hinteren Platte (7, 207) in Translation blockiert ist, sodass der Keil des Führungsteils in der Zwischenposition zum Festklemmen von dem sich in der zweiten Position der vorderen Platte befindlichen Rückhaltearm der Feder befreit ist und sich das Führungsteil in einer entfernten, freigemachten Blockierposition des sich in der erniedrigten Position der hinteren Platte befindlichen Kipphebels (85, 277) befindet.

11. Fahrradpedal nach Anspruch 10, **dadurch gekennzeichnet, dass** das Führungsteil (216) versehen ist mit einem elastischen Mittel (230) zum Bewirken des Zurückweichens des Führungsteils, während das Pedal in der Inaktivposition ist, wobei das Führungsteil also von der Blockage des sich in der erniedrigten Position der hinteren Platte befindlichen Kipphebels (277) befreit ist, wobei das Zurückweichen des Führungsteils gleichzeitig die Befreiung des Rückhaltearms (214) der sich in der ersten Position der vorderen Platte befindlichen Feder (205) aus dem Einfluss des Keils bewirkt.

12. Fahrradpedal nach einem der Ansprüche 9 bis 11, **dadurch gekennzeichnet, dass** der Kipphebel (85, 277) ein abgerundetes freies äußerstes Ende (120) um dem Abstützarm (117, 217) der Feder (105, 205) zu ermöglichen, während des Einkuppelns der zur Koppelung dienenden Mittel (11) auf diesem abgerundeten äußersten Ende (120) zu gleiten, und eine nahe diesem freien äußersten Ende (120) gelegene Einkerbung (123, 220), die dazu vorgesehen ist, mit dem äußersten Ende des Abstützarms (117, 217) in der Aktivposition oder der Zwischenposition zum Festklemmen eines Schuhs (12) zusammenzuwirken, umfasst.

13. Fahrradpedal nach Anspruch 12, **dadurch gekennzeichnet, dass** das freie äußerste Ende des Kipphebels (277) dazu angepasst ist, die automatische Einkupplung des Abstützarms (217) der Feder (205) in die Einkerbung (220) nahezu am Ende des winkellaufs der vorderen Platte (203) zwischen ihrer ersten und zweiten Position zu bewirken.

14. Fahrradpedal nach einem der Ansprüche 6 bis 13, **dadurch gekennzeichnet, dass** das Basisteil (213) einen unteren Anschlag (213a) aufweist, der mit der hinteren Platte (207) zusammenwirkt, während diese sich in der erniedrigten Position befindet, um eine korrekte Ausrichtung der hinteren Platte (207) in Bezug auf die vordere Platte (203) in der Inaktivposition oder der Zwischenposition zum Festklemmen des Schuhs (12) sicherzustellen.

15. Fahrradpedal nach Anspruch 14, **dadurch gekennzeichnet, dass** das Basisteil (213) eine Führungsrampe (213b) zum Führen der hinteren Platte (207) gegen den unteren Anschlag (213a), während diese aus ihrer in Winkelrichtung versetzten Position in Bezug auf die vordere Platte (203) in ihre erniedrigte Position, in der sie mit der vorderen Platte (203) ausgerichtet ist, versetzt wird, aufweist.

16. Fahrradpedal nach einem der Ansprüche 5 bis 15, **dadurch gekennzeichnet, dass** die zum Einkuppeln dienenden Mittel (11) weiterhin elastische Mittel (124, 224) zur Winkelrückstellung der hinteren Platte (7, 207) in Bezug auf die vordere Platte (3, 203) umfassen.

17. Fahrradpedal nach einem der Ansprüche 5 bis 16, **dadurch gekennzeichnet, dass** die Mittel (121) zum Auskuppeln der zur Kopplung dienenden Mittel (11) die Mittel (17) zur Verbindung der hinteren Platte (7, 207) und des Basisteils (13, 213) umfassen.

18. Fahrradpedal nach Anspruch 17, **dadurch gekennzeichnet, dass** die zum Auskuppeln dienenden Mittel (121) weiterhin elastische Mittel (122, 222) zur Ingangsetzung der kippenden Bewegung der hinteren Platte (7, 207) in die erniedrigte Position umfassen.

19. Fahrradpedal nach Anspruch 18, **dadurch gekennzeichnet, dass** die elastischen Mittel (124) zur winkelrückstellung der hinteren Platte (7) in Bezug auf die vordere Platte (3) und die elastischen Mittel (122) zur Ingangsetzung der kippenden Bewegung der hinteren Platte (7) eine Spiralfeder (125) umfassen, die um die Kippachse (33) angeordnet ist und von der eine Windung am äußers ten Ende (127) auf der hinteren Platte (7) abgestützt ist und von der die andere Windung am äußersten Ende (129) auf dem Basisteil (13) abgestützt ist, um die hintere Platte (7) in Bezug auf die vordere Platte (3) in Winkelrichtung zurückzustellen.

20. Fahrradpedal nach Anspruch 18, **dadurch gekennzeichnet, dass** die zur Winkelrückstellung dienenden elastischen Mittel (224) eine Verschlussfeder umfassen, die um die Drehachse (253) angeordnet ist und von der ein Litzenfaden am äußersten Ende (229) sich auf dem Basisteil (213) abstützt, und dass die zur Ingangsetzung dienenden elastischen Mittel (222) eine Spiralfeder umfassen, die um die Kippachse (271) angeordnet ist und von der eine Windung am äußersten Ende (227) sich auf der hinteren Platte (207) abstützt.

21. Fahrradpedal nach Anspruch 19 oder 20, **dadurch gekennzeichnet, dass** das äußerste Ende (129, 229) der Feder zur Winkelrückstellung (124, 224), die sich auf dem Basisteil (13, 213) abstützt, mit einem Exzenter (135, 325) zusammenwirkt, der durch das Basisteil getragen wird und der durch Drehen einstellbar ist, um die elastische Kraft, die durch das sich auf dem Basisteil abstützende äußerste Ende (129, 229) ausgeübt wird, einzustellen.

22. Fahrradpedal nach einem der Ansprüche 1 bis 21, **dadurch gekennzeichnet, dass** in der Aktivposition zum Festklemmen eines Schuhs die vordere Platte (3, 203) und die hintere Platte (7, 207) einen Winkel bilden, der zwischen 10° und 20° und insbesondere bei 15° liegt.

23. Fahrradpedal nach einem der Ansprüche 1 bis 22, **dadurch gekennzeichnet, dass** die vordere Platte (3, 203) auf ihrer zum Kontakt mit dem Schuh bestimmten Seite Nuten (182) zum Verstärken der Kraftübertragung zwischen dem Schuh (12) und der vorderen Platte umfasst.

24. Fahrradpedal nach einem der Ansprüche 1 bis 23, **dadurch gekennzeichnet, dass** es Mittel (160, 260) zum Blockieren der Drehwelle (21) zum Festhalten des Pedals (1, 201) während der Abwesenheit eines in das vordere Fußpassstück (5, 280) hineingesteckten Schuhs in einer in Bezug auf die Kurbel festen Winkelposition und Mittel (174, 274) zum Deaktivieren der zum Blockieren dienenden Mittel (160, 260) umfasst.

25. Fahrradpedal nach Anspruch 24, **dadurch gekennzeichnet, dass** die zum Blockieren dienenden Mittel (160) eine zum Blockieren dienende Spiralfeder (162) umfassen, die eng anliegend um die Drehwelle (21) angeordnet ist und die bezüglich Verdrehen fixiert ist, um die Drehachse durch die Reibung der Windumgen der Feder (162) gegen die Drehachse (21) zu blockieren.

26. Fahrradpedal nach Anspruch 25, **dadurch gekennzeichnet, dass** die zum Inaktivieren dienenden Mittel einen Steuerhebel (174) umfassen, der beweglich mit dem Basisteil (13) verbunden ist und der mit einer Endwindung (170) der zum Blockieren dienenden Feder (162) zusammenwirkt, wobei der Steuerhebel (174) verschiebbar ist zwischen einer Ruheposition, in der er, gehalten durch die elastische Kraft der Feder (162) zum Blockieren, über die vordere Platte (3) durch eine in dieser belassene Öffnung (176) hinausgeht, und einer Inaktivierungsposition, in der er durch Abstützen auf der Endwindung (170) den Durchmesser aller Windungen der Feder zum Blockieren (162) vergrößert, um die Drehwelle in Rotation frei zu geben .

27. Fahrradpedal nach Anspruch 24, **dadurch gekennzeichnet, dass** die zum Blockieren dienenden Mittel eine Gelenkverbindungsnuss (260), die eine sich in Querrichtung öffnende, längliche Öffnung (261) aufweist, die von der Drehwelle (21) durchzogen ist, und eine zum Blockieren dienende Feder (262), die von der Gelenkverbindungsnuss derart angesprochen wird, dass die Drehwelle durch Reibung gegen die In-. nenfläche der länglichen Öffnung blockiert wird, umfassen.

28. Fahrradpedal nach Anspruch 27, **dadurch gekennzeichnet, dass** die zum Inaktivieren dienenden Mittel einen Steuerhebel (274) umfassen, der beweglich mit dem Basisteil (213) verbunden ist und der mit einer Gelenkverbindungsnuss (260) zusammenwirkt, wobei der Stellhebel (274) verschiebbar ist zwischen einer Ruhestellung, in der er unter der Einwirkung der elastischen Kraft der zum Blockieren dienenden Feder (262) über die vordere Platte (203) durch eine darin belassene Öffnung (276) hinausgeht, und einer Inaktivierungsposition, in der der Steuerhebel (274) in der Vorderplatte (203) eingezogen ist und die Gelenkverbindungsnuss in eine Position verschiebt, in der die Drehwelle (21) nicht mehr in reibendem Kontakt mit der länglichen Öffnung (261) ist.

29. Fahrradpedal nach Anspruch 4, **dadurch gekennzeichnet, dass** es ein erstes Katzenauge (147), das von der vorderen Platte (3, 203) oder dem Basisteil (13, 213) getragen wird, und ein zweites Katzenauge (151), das von der hinteren Platte (7, 207) getragen wird, umfasst.

30. Fahrradpedal nach den Ansprüchen 1 bis 29, **dadurch gekennzeichnet, dass** das vordere Fußpassstück (280) die Form einer Krake hat, die einen Mittelkörper mit einer Vielzahl langer schmaler Riemen (281) umfasst, die auf der Unterseite der vorderen Platte (203) befestigt worden sind.

31. Fahrradpedal nach Anspruch 30, **dadurch gekennzeichnet, dass** die vordere Platte (203) auf ihrem seitlichen Umfang Öffnungen (285) aufweist, um darin die freien äußersten Enden der langen schmalen Riemen (281) einzuführen, die durch beweglich mit dem Innenraum der vorderen Platte (203) verbundene Fixierungsklammern (283, 284) fixiert werden.

## Claims

1. Bicycle pedal (1, 201) designed for connection to a crank of a pedalling mechanism and comprising a front plate (3, 203) which carries a front foot calliper (5, 280) and a rear plate (7, 207) which carries a rear foot calliper (9), with means (11) for coupling the rear plate to the front plate in a position in which a shoe (12) is actively gripped by the front and rear foot callipers and means for disengaging the said coupling means from the active position of the rear plate to an inactive position thereof, **characterised in that** it also comprises means (81) for bringing the rear plate (7, 207) into the active position by action upon the front plate (3, 203).

2. Bicycle pedal according to Claim 1, **characterised in that** the means (81) for bringing the rear plate (7, 207) to the active position comprise means (83) for engaging the coupling means (11) which ensure a relative positioning of the front (3, 203) and rear (7, 207) plates in an intermediate position where the shoe is gripped by the front (5, 280) and rear (9) foot callipers.

3. Bicycle pedal according to Claim 2, **characterised in that** the means (81) for bringing the rear plate (7, 207) to the active position by action upon the front plate (3, 203) also comprise means (88) for the angular displacement of the front plate / rear plate assembly (3, 203, 7, 207) which are held together by the engagement means (83), by action upon the front plate (3, 203), from the intermediate position towards the said active position, and means (89) for maintaining the said assembly in the said active position.

4. Bicycle pedal according to Claim 3, **characterised in that** the said coupling means (11) comprise a base (13, 213) carrying a bearing spindle (21) designed to be fixed to the crank of the pedalling mechanism, with means (15) for articulating the front plate (3, 203) to the base (13, 213) along an articulation axis (25, 225) essentially parallel to the bearing spindle (21) and a distance away from it, the front plate (2, 203) being movable about its articulation axis (25, 225) between a first position in which the front plate (3, 203) rests in contact with the base (13, 213) and a second position in which the front plate actuates the said engagement means (83) and connection means (17) between the rear plate (7, 207) and the base (13, 213).

5. Bicycle pedal according to Claim 4, **characterised in that** the maintaining means (89) comprise elastic means (91, 214) for holding the front plate (3, 203) onto the base (13, 213), to maintain the front plate in the said first contact position against the base.

6. Bicycle pedal according to Claims 4 or 5, **characterised in that** the connection means (17) between the rear plate (7, 207) and the base (13, 213) comprise means (27, 235) for pivoting the rear plate (7, 207) about a pivoting axis (29, 253) essentially perpendicular to a plane containing the bearing spindle (21) and the axis (25, 225), and means (31, 222) for tilting the rear plate (7, 207) about a tilt axis (33, 271) essentially perpendicular to the pivoting axis (29, 253) to enable a tilting movement of the rear plate (7, 207) between a raised position in which the rear plate is in its active position and a lowered position in which the rear plate is in its inactive position or its intermediate position.

7. Bicycle pedal according to Claim 6, **characterised in that** the angular displacement means (88) of the front plate / rear plate assembly comprise means (15) for articulating the front plate (3, 203) on the base (13, 213) and means (31, 222) for tilting the rear plate about the tilt axis (33, 271), the articulation axis (25, 225) of the front plate (3, 203) on the base (13, 213) and the tilt axis (33, 271) of the rear plate being essentially aligned when the front and rear plates are fixed by the engagement means (83) to allow an angular displacement of the front plate / rear plate assembly from the intermediate position towards the said active position.

8. Bicycle pedal according to Claim 7, **characterised in that** the said engagement means (83) of the said coupling means (11) comprise a tilt lever (85, 277) attached to the rear plate (7, 207) and, carried by the front plate (3, 203), elastic means (87, 217) for pressing on the tilt lever (85, 277) to fix the front plate relative to the rear plate.

9. Bicycle pedal according to Claim 8, **characterised in that** the elastic pressing means (87, 217) and the elastic holding means (91, 214) are formed by a spring (105, 205) whose central part (107) is fixed against the face of the front plate (3, 203) opposite the base, this spring (105, 205) comprising a retaining branch (113, 214) whose free end cooperates, in the active position for gripping a shoe (12), with a retaining pawl (115, 215) mounted on the base (13, 213), and a contact branch (117, 217) whose end, in the active or intermediate position for gripping a shoe (12), presses against the tilt lever (85, 277).

10. Bicycle pedal according to Claim 9, **characterised in that** the retaining pawl (115, 215) is formed on a slider (216) that can be displaced in the longitudinal direction on the base (13, 213), the said slider (216), in the active gripping position, cooperating by means of its pawl with the retaining branch (113, 214) of the spring (105, 205) and being blocked in translation by the tilt lever (85, 277) of the rear plate (7, 207), while in the intermediate gripping position the pawl of the slider is freed from the retaining branch of the spring which is in the second position of the front plate, and the slider is in a retracted position disengaged from blocking the tilt lever (85, 277) which is in the lowered position of the rear plate.

11. Bicycle pedal according to Claim 10, **characterised in that** the slider (216) is provided with elastic retraction means (230) to bring about the retraction of the slider when the pedal is in the inactive position, the slider then being disengaged from blocking the tilt lever (277) which is in the lowered position of the rear plate, the retraction of the slider at the same time freeing the engagement of the pawl relative to the retaining branch (214) of the spring (205) which is in the first position of the front plate.

12. Bicycle pedal according to any of Claims 9 to 11, **characterised in that** the tilt lever (85, 277) comprises a free end (120) which is rounded to allow the contact branch (117, 217) of the spring (105, 205) to slide onto the said rounded end (120) during the engagement of the said coupling means (11), and a recess (123, 220) near this free end (120) designed to cooperate with the said end of the said contact branch (117, 217) in the active or intermediate gripping position of a shoe (12).

13. Bicycle pedal according to Claim 12, **characterised in that** the free end of the tilt lever (277) can bring about the automatic engagement of the contact branch (217) of the spring (205) in the recess (220) essentially at the end of the angular travel (??) of the front plate (203) between its first and second positions.

14. Bicycle pedal according to any of Claims 6 to 13, **characterised in that** the base (213) comprises a low abutment (213a) which cooperates with the rear plate (207) when it is in the lowered position, to ensure correct alignment of the rear plate (207) relative to the front plate (203), in the inactive or intermediate position of gripping a shoe (12).

15. Bicycle pedal according to Claim 14, **characterised in that** the base (213) comprises a guide ramp (213b) to guide the rear plate (207) towards the low abutment (213a) when it is displaced from its position angularly out of line with the front plate (203) towards its lowered position where it is aligned with the front plate (203).

16. Bicycle pedal according to any of Claims 5 to 15, **characterised in that** the said coupling means (11) also comprise elastic angular restoring means (124, 224) for the rear plate (7, 207) relative to the front plate (3, 203).

17. Bicycle pedal according to any of Claims 5 to 16, **characterised in that** the means (121) for disengaging the coupling means (11) comprise the said connection means (17) between the rear plate (7, 207) and the base (13, 213).

18. Pedal according to Claim 17, **characterised in that** the disengagement means (121) also comprise elastic means (122, 222) for initiating the tilting movement of the rear plate (7, 207) towards the lowered position.

19. Bicycle pedal according to Claim 18, **characterised in that** the elastic angular restoring means (124) for the rear plate (7) relative to the front plate (3) and the elastic means (122) for initiating the tilting movement of the rear plate (3) comprise a helical spring (125) arranged around the tilt axis (33), one end turn (127) of which is in contact with the rear plate (7) and the other end turn of which (129) is in contact against the base (13) to restore the rear plate (7) angularly relative to the front plate (3).

20. Pedal according to Claim 18, **characterised in that** the elastic angular restoring means (224) comprise a hairpin-shaped spring arranged around the pivoting axis (253), one end arm (229) of which is in contact with the base (213), and the elastic initiating means (222) comprise a helical spring arranged around the tilt axis (271), one end turn (227) of which is in contact with the rear plate (207).

21. Bicycle pedal according to Claims 19 or 20, **characterised in that** the end (129, 229) of the angular restoring spring (124, 224) in contact with the base (13, 213) cooperates with an eccentric (135, 325) carried by the base and which can be adjusted in rotation to adjust the elastic force exerted by the said end (129, 229) against the base.

22. Bicycle pedal according to any of Claims 1 to 21, **characterised in that** in the active position of gripping a shoe, the front plate (3, 203) and the rear plate (7, 207) make an angle between 10° and 20°, in particular 15°.

23. Bicycle pedal according to any of Claims 1 to 22, **characterised in that** the front plate (3, 203) has in its face intended to be in contact with the shoe, grooves (182) to improve the transmission of force between the shoe (12) and the front plate.

24. Bicycle pedal according to any of Claims 1 to 23, **characterised in that** it comprises means (160, 260) for blocking the bearing spindle (21) to hold the pedal (1, 201) steady, when no shoe is inserted in the front foot calliper (5, 280), in an angular position fixed relative to the crank, and means (174, 274) for deactivating the said blocking means (160, 260).

25. Pedal according to Claim 24, **characterised in that** the blocking means (160) comprise a blocking helical spring (162) tightened around the bearing spindle (21) and rotationally fixed, to block the bearing spindle by the friction of the turns of the spring (162) against the bearing spindle (21).

26. Pedal according to Claim 25, **characterised in that** the said deactivation means comprise a control lever (174) articulated to the base (13) and cooperating with an end turn (170) of the blocking spring (162), such that the control lever (174) can be moved between a rest position in which, maintained by the elastic force of the blocking spring (162), it projects beyond the front plate (3) through an opening (176) made in the latter, and a deactivation position in which by pressure against the said end turn (170) it enlarges all the turns of the blocking spring (162) to leave the bearing spindle free to rotate.

27. Pedal according to Claim 24, **characterised in that** the blocking means comprise an articulation sleeve (260) having an oblong opening (261) that opens transversely, through which the bearing spindle (21) passes, and a blocking spring (262) which exerts a force on the articulation sleeve in such manner that the bearing spindle in blocked by friction against the inside surface of the oblong opening.

28. Pedal according to Claim 27, **characterised in that** the said deactivation means comprise a control lever (274) articulated to the base (213) and cooperating with the articulation sleeve (260), such that the control lever (274) can move between a rest position in which, under the action of the elastic force of the blocking spring (262), it projects beyond the front plate (203) through an opening (276) made in the latter, and a deactivation position in which the control lever (274) is out of the way within the front plate (203) and moves the articulation sleeve to a position in which the bearing spindle (21) is not longer in frictional contact with the oblong opening (261).

29. Pedal according to Claim 4, **characterised in that** it comprises a first reflector (147) on the front plate (3, 203) or the base (13, 213) and a second reflector (151) on the rear plate (7, 207).

30. Pedal according to any of Claims 1 to 29, **characterised in that** the front foot calliper (280) is multi-limbed, with a central body provided with a plurality of strips (281) which are fixed on the underside of the front plate (203).

31. Pedal according to Claim 30, **characterised in that** the front plate (203) has on its peripheral side wall openings (285) for the insertion of the free ends of the strips (281), which are held fast by fixing clips (283, 284) articulated to the inside of the front plate (203).
